(19) **Europäisches Patentamt / European Patent Office / Office européen des brevets**

(11) **EP 4 325 381 A1**

(12) # EUROPEAN PATENT APPLICATION
published in accordance with Art. 153(4) EPC

(43) Date of publication:
**21.02.2024 Bulletin 2024/08**

(21) Application number: **22788002.8**

(22) Date of filing: **25.03.2022**

(51) International Patent Classification (IPC):
**G06F 17/13** [(2006.01)]

(52) Cooperative Patent Classification (CPC):
**G06F 17/13**

(86) International application number:
**PCT/JP2022/014497**

(87) International publication number:
**WO 2022/220077 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.04.2021 JP 2021067801**

(71) Applicant: **Whiterook G.k.**
**Yokohama-shi, Kanagawa 2310062 (JP)**

(72) Inventor: **KIDOKORO Hitoshi**
**Yokohama-shi, Kanagawa 231-0834 (JP)**

(74) Representative: **Cross, James Peter Archibald et al**
**Maucher Jenkins**
**Seventh Floor Offices**
**Artillery House**
**11-19 Artillery Row**
**London SW1P 1RT (GB)**

(54) **NUMERICAL CALCULATION DEVICE FOR ORDINARY DIFFERENTIAL EQUATION, METHOD FOR EXECUTING ARITHMETIC OPERATION FOR SOLVING ORDINARY DIFFERENTIAL EQUATION IN CALCULATION DEVICE, AND STORAGE MEDIUM HAVING PROGRAM STORED THEREIN**

(57)     A state equation that is an ordinary differential equation comprising terms of first and second coefficient matrices multiplied respectively by a state variable vector term indicating a state and a vector term indicating an input, is set. The state equation has a form of a difference equation relating to discrete time determined by predetermined computation step, and in the state equation the first and second coefficient matrices each has a finite order first matrix power series which approximates a matrix exponential function and is composed of a power term of a product of a predetermined computing step multiplied by constant matrix. Yummy matrix computing means 502 that is an advance computing means, separates computing steps into time invariable computing steps $h_{exp}$ and time variable computing steps h, and computes, in advance of the solving operation for the state equation, Yummy matrix that is a finite order second matrix power series composed of power term of product of predetermined computing steps $h_{exp}$ multiplied by constant matrix A, and the first and second constant coefficient matrices based on the Yummy matrix. State equation computing means 509 executes the operation for solving the difference equation, while calculating respectively first and second constant coefficient matrices, by simple multiplying operation of the respective first and second constant coefficient matrices calculated by the yummy matrix computing means 502 and time variable computing steps sequentially calculated by the pulse signal measuring means 508.

How large the order N of the matrix exponential approximation is, the power series portion can be computed in advance as Yummy matrix, so the operation for solving the state equation may be executed with high accuracy and short time.

EP 4 325 381 A1

Fig. 5

HILS COMPUTING DEVICE

500

host computer 520

A, B, C, D

communication means 501

$A_H$, $B_H$, $C_H$, $D_H$ matrices
$A_L$, $B_L$, $C_L$, $D_L$ matrices

voltage output means 510

Y

state equation computing means 509

timing pulse

$A_{ym}$ matrix

Yummy matrix memory means 503

$A_H$, $A_L$ matrices, $h_{exp}$

Yummy matrix computing means 502

$h_H$, $h_L$

pulse signal measuring means 508

$h_{exp}$

vector calculating means 506

U

reference time generating means 507

pulse

digital signal input means 504

voltage input means 505

## Description

### Field of the Invention

The present invention relates to a numerical computing device for executing an operation solving an ordinary differential equation modeling mathematically a physical phenomenon, a method for executing an operation solving an ordinary differential equation in such a computing device, and a memory medium in which a program is stored.

### Background Art

There are many cases where an ordinary differential equation is set up for a motion equation as well as an electronic circuitry expressing a physical phenomenon as a mathematical model. However, most of ordinary differential equations are not easily solved analytically. For this reason, there have been proposed various numerical computing techniques since the time of Carl Runge as well as Matin Kutta in the 19-th Century.

In recent years, there are a great number of control devices to which objects to be controlled are connected, and which conduct feedback control for the objects. Those objects to be controlled may be mechanical devices, or electronic circuits, as the case maybe. For example, in automobiles, there are many cases where a control device called ECU (Electronics Control Unit) is installed. In such cases, the respective ECUs conduct feedback control for an object to be controlled, that is, a mechanical device such as engine, transmission or suspension. Further, in recent vehicles, several different voltages are used for electronic equipment, the ECUs controlling the voltage converter units provide feedback control for the intermittent state of the switch elements so that the intermittency of the switch elements results in a predetermined voltage or current. These control devices have the characteristic that they only function when the control object is connected. Accordingly, in order to conduct development of the control device, it has been necessary that the object to be controlled is actually connected to the control device and tests and experiments are conducted. In a case, however, where a test or an experiment is conducted for a control device in a stage of development, incomplete control is apt to be conducted by the control device during the development, causing a failure by which the object to be controlled is broken. Further, in a case of development of a control device such as a lunar module or space craft, it has been impossible to carry out any test or experiment in an actual use environment. In a case where an actual machine as an object to be controlled does not exist in a stage of development, it is not possible to connect the object to be controlled to the control device.

In order to solve such a problem, a test device called "HILS"(Hardware In the Loop Simulator) has been conventionally known (for example, refer to Patent Document 1). In the HILS, a mechanical device or an electronic circuit that is an object to be controlled is simulated by a software treatment in a computing device. In this case, a behavior of the object to be controlled is expressed by a mathematical model realized by the software installed in the computer. The computing device is equipped with physical inputting/outputting means by which actual signals such as electric voltages or electric current signals are inputted or outputted. To the physical inputting/outputting means of the computing device, the actual inputting/outputting means of the control device are connected. The computing device simulates the behavior of the object to be controlled by conducting a real time execution of an operation for solving an ordinary differential operation. The computing device sends into the control device and outputs therefrom actual signals in real time to activate actually the control device that is hardware, thereby conducting tests. In other words, the HILS works as a real time simulator. Thus, the HILS enables the control device such as ECU to be designed and to assist conducting testing it, without preparing an actual hardware device as an object to be controlled.

Further, a test device called SILS (Software In the Loop Simulator) is known (for example, refer to the Patent Document 1). In the SILS, the control device itself and its physical inputting and outputting means also are simulated by the computing device. The SILS conducts simulation of the entire operation of the control device and the object to be controlled thereby by a software treatment executed by the computing device.

A mathematical model used in the HILS as well as in the SILS is a motion equation expressing the behavior of a mechanical device to be controlled or a circuit equation expressing the behavior of an electronic circuit to be controlled. Such an equation is generally expressed as a state equation that is an ordinary differential equation. In particular, a linear state equation in which a sum of a product of a state variable vector multiplied by a first coefficient matrix and a product of an input vector multiplied by a second coefficient matrix, equals to a first degree differential equation of the state variable vector, is a useful mathematical model for expressing a behavior of the object to be controlled. This model, even in case of non-linear, can be often used approximately to the above mentioned form. Here, the term "state variable vector" refers to a solution of the ordinary differential equation.

In the HILS, while solving in real time a linear state equation in synchronous with a control device acting in real time, it is necessary to input or output the solved signals in real time into the control device or therefrom. Accordingly, in order to meet with the real time treatment, a technique for executing in real time a numerically solving operation of the state equation in high speed in the computing device, is quite important.

A Runge-Kutta method is known, as a typical method for solving a state equation of a continuous system, in which the state equation is expressed as discrete signal format so that calculation is made according to a difference equation expressed in discrete signal format.

Meanwhile, if coefficient matrix elements in a linear state equation are constants which are invariable during a certain time period, that equation is an equation of a so-called LTI (Linear Time Invariant) system. The physical model used in the HILS or SILS, LTI system is often sufficient to assume an LTI system. In the state equation of the LTI system, there may be a case where it is possible to convert coefficient matrix to diagonal matrix in which diagonal elements are eigenvalues differing from each other.

An eigenvalue included in such a diagonal matrix is generally a complex number. A state equation whose plural eigenvalues are remarkably different in magnitude from each other is called as a so-called Stiff equation whose solution includes relatively high frequency components and low frequency components (For example, refer to Patent Document 2.).

**Prior Art References**

**Patent Documents**

Patent Document 1: Japan Patent No. 5692739
Patent Document 2: Japan Patent Appln. Laid Open No. 2005-025651

**Summary of The Invention**

**An object to be solved by the Invention**

Next, consideration is made to a case where a state equation (ordinary differential equation) that is able to assume an LTI system as stated above, is converted to a difference equation under the above mentioned Runge-Kutta method or the like and then computed. In this case, if a relation between computing step of discrete times and the eigen values of the diagonal matrix in the difference equation is not appropriate, it is known that the computed results diverse into plus infinite($\infty$) or minus infinite ($-\infty$). Particularly, in case where the above mentioned Stiff equation is solved, in order that no diversion occurs even if the absolute values of the eigenvalues are large, it is necessary to make computing steps h small. However, in case where the computing step h is made small, the computation step becomes too small for eigenvalue having small absolute value which dominates the response of the equation. Accordingly, if computing steps are made small, computing errors would be accumulated, and more than that, in the case of the HILS, for example, sufficient computing could not be made within a physical time meant by the computing step h.

In order to solve such a problem as described above, methods using a backward differential equation called a backward Euler method, a trapezoidal method (Tustin method), or a Gear method, have been conventionally known. In these methods, so called entire left half of a complex plane is made a region in which stable computing is obtained. However, these methods called implicit method are not easy to compute. In more detail, inverse matrix is required to be computed even in the LTI system using an ordinary differential equation as described above, and quite high load conducting the computation is required. In a case where the ordinary differential equation used is non-linear, repeated computations such as Newton method are required, which causes quite high computation load. For this, backward Euler method, Tustin method, or Gear method is not suitable to HILS which requires real time computation. Even if SILS is used, time required for verification becomes too long. In addition to such a problem, in a case where HILS is used after verification has been conducted by SILS, precision of verification would be deteriorated since computation algorithms are different.

Further, for the computation step h, the backward Euler method has a first order approximation accuracy, and is low in computation accuracy. The trapezoidal method has a second order approximation accuracy, but there is a problem that, with respect to eigen values which are far from the origin, solutions do not converge to a constant but oscillate. On the other hand, in the Gear method, the higher the approximation order is, the narrower the stable region is, and unstable region would remain in the left half plane region in which the ordinary differential equation of a continuous system would be otherwise stable. Therefore, we have to say that there would be no computation algorithms by which the Stiff equations could be solved satisfactorily.

As seen in the above considerations, it has been conventionally difficult to execute, in a computing device, an operation for solving appropriately the Stiff equation having both of eigen values whose absolute values are large and eigen values whose absolute values are small.

The invention of the present application has an object to make it possible to execute an operation for solving a Stiff ordinary differential equation stably and highly accurately with less computing load by a computing device.

**Means for solving the Object**

A numerical computing device for solving an ordinary differential equation as an example of an aspect of the present invention, executes an operation for solving a state equation that is an ordinary differential equation having mathematically modeled a motion of an object to be controlled, the numerical computing device comprising:

an equation setting means, which, with respect to an ordinary differential equation that includes a term of a state variable vector term indicating a state multiplied by a first coefficient matrix and a term of input vector term indicating input multiplied by a second coefficient matrix, sets a state equation which has a form of a difference equation showing difference relationship between discrete times determined by predetermined computing step, and in which the first coefficient matrix and the second coefficient matrix are defined each to have a first matrix power series that approximates a matrix exponential function whose index is a constant matrix assumed to be invariable constant in a certain time interval and composed of power term of a product of a predetermined computing step multiplied by a constant matrix and that is in finite order;

advance computing means for separating the computing steps into time invariable computing steps that are invariable in time and time variable computing steps that are variable in time, and, at least in advance of the operation solving the state equation, computing finite order second matrix power series composed of power term of product of the time invariable computing step and the constant matrix; and

state equation computing means for executing, while calculating the first coefficient matrix and the second coefficient matrix based on the second matrix power series calculating in advance, the operation solving the difference equation on the basis of said time variable computing steps calculated sequentially.

**Effects of the Invention**

According to the present invention, it becomes possible to execute an operation solving a Stiff ordinary differential equation stably and highly accurately with lowered computation load in a computing device. Thereby, a scope of an object to be developed of a control device to which, for example, HILS is applicable, can be enlarged. In addition, not only in the field of SILS but also even in the field of general numerical computation, it is possible to reduce time required for computation, improve the consistency between verification results of SILS and HILS and perform various analyses effectively.

**Brief Explanation of Drawings**

Fig. 1 is a view explaining a stable region in N-th order matrix exponential approximation method in computing step h = 1.
Fig. 2 is a view explaining a complex plane region of product $h\lambda$ of eigen value $\lambda$ multiplied by computing step h, stably computable by Runge-Kutta method.
Fig. 3 is a view explaining a simulated operation of a converter circuit according to a fixed step method.
Fig. 4 is a view explaining a simulated operation by a converter circuit according to a partially variable step method.
Fig. 5 is a view showing a block diagram of an embodiment of the computing device.
Fig. 6 is a view explaining an example of a circuit of a boost converter.
Fig. 7 is a view showing a flowchart of a processing example of a pulse signal measuring means.
Fig. 8 is a view showing a flowchart of a processing example of means for computing a state equation.
Fig. 9 is a view (No.1) explaining a stable region of a Yummy method.
Fig. 10 is a view (No.2) explaining a stable region of a Yummy method.
Fig. 11 is a view (No.3) explaining a stable region of a Yummy method.
Fig. 12 is a view (No.1) explaining a computation result of a time series of a Yummy method.
Fig. 13 is a view (No.2) explaining a computation result of a time series of a Yummy method.
Fig. 14 is a view showing a block diagram of another embodiment of the computing device.
Fig. 15 is a table showing values of respective data array stored in Yummy matrix memory in the another embodiment of the computing device.
Fig. 16 is a view of a flowchart showing an example of Yummy matrix selecting processing in the another embodiment of the computing device.

**Embodiments of the Invention**

Hereinafter, the embodiments for carrying out the present invention will be explained in detail with reference to the accompanying drawings. Prior to explaining the embodiments in detail, general background relating to a solving method by numerical computation using an ordinary differential equation, is explained. After having made technical problems of such general technique clear concretely, the present embodiments will be described in detail.

<Ordinary differential equation>

A mathematical model used in the HILS as well as in the SILS, is a motion equation expressing a motion of a mechanical device or a circuit equation expressing an action of an electronic circuit. Such equation may be expressed as an ordinary differential equation (1) as below:

$$\frac{d}{dt}X(t) = F(t,X) \qquad \cdot \cdot \cdot \ (1)$$

where X denotes a state variable vector having arbitrary number of elements, t denotes a variable expressing time, and F(t,X) denotes a vector function.

It is known that the ordinary differential equation of the above expression (1) can be expressed by a linear state equation having the following expression (2):

$$\frac{d}{dt}X(t) = AX(t) + BU(t) \qquad \cdot \cdot \cdot \ (2)$$

where each of A and B denotes a matrix, and U(t) denotes an input vector expressing external force, by a known technique such as piecewise linearization method using operating points.

Thus, in the linear state equation, the sum of products AX(t) and BU(t) is equal to the first order derivative of the state variable vector:

$$\frac{d}{dt}X(t)$$

where AX(t)is a product of state variable vector X(t) multiplied by coefficient matrix A, and BU(t)is a product of input vector U(t) multiplied by coefficient matrix B.

In the HILS as well as SILS, it is important to execute efficiently an operation for solving the state equation having a form of the expression (2). Particularly, in the HILS, it is necessary that, while solving the state equation of the expression (2) in real time in synchronous with the control device acting in real time, the resultant signals are supplied in real time to the control device. Therefore, a technique for executing with high speed an operation for solving numerically the state equation by a computing device so as to meet with the real time treatment, is quite important.

<Matrix exponential function method>

By the way, it is not always necessary that the respective coefficient matrices A and B in the above expression (2) are constant matrices. However, if elements in the coefficient matrices A and B are constants which are invariable in a certain time interval, the expression (2) becomes a linear state equation of a so-called LTI (Linear Time Invariant) system. A physical model used in the HILS as well as in the SILS may often be sufficient to assume an LTI system. In a case where it is possible to assume that the above expression (2) is a state equation of the LTI system and that the input vector U(t) is a constant U, a general solution of the following expression (3) can be obtained using a matrix exponential function e^At:

$$X(t) = e^{At}X(0) + (e^{At} - I)A^{-1}Bu \qquad \cdot \cdot \cdot \ (3)$$

Here, e^At has the following expression (4):

$$e^{At} = I + At + \frac{1}{2!}(At)^2 + \cdots + \frac{1}{n!}(At)^n + \cdots + \frac{1}{\infty!}(At)^\infty = \sum_{k=0}^{\infty} \frac{1}{k!}(At)^k$$

$$\cdots \ ( \ 4 \ )$$

In the above expression (4), computation to the term of infinite ($\infty$) is actually not possible, so the following expression (5) in which the computation is discontinued at an integer N, or any approximating method such as Pade approximant is practically used.

$$e^{At} \approx \sum_{k=0}^{N} \frac{1}{k!}(At)^k \quad \frac{(At)^0}{0!} = I \qquad \cdots \ ( \ 5 \ )$$

where *I* denotes Identity matrix.

Even if either of the discretization at N or the Pade approximation, is used, an approximated value is obtained. Accordingly, in order to reduce computation errors of the expression (5), it is a general practice to introduce a predetermined time interval "h" and conduct discrete computations X1, X2, ... , Xn, using the following difference equation (6):

$$X_{n+1} = \left( \sum_{k=0}^{N} \frac{1}{k!}(hA)^k \right) X_n + \left( \sum_{k=0}^{N} \frac{1}{k!}(hA)^k - I \right) A^{-1} B U_n \qquad \cdots \ ( \ 6 \ )$$

where U(t) is constant during the time interval h, and expressed as Un.

In the present embodiment, an expression using the difference equation (6) is called as an N-th-order matrix exponential approximation method.

<Computation stability>

In the LTI system in which coefficient matrices A and B are constants, there is a case where the above-mentioned expression (2) can be eigen-value decomposed into the following expressions (7) and (8):

$$\frac{d}{dt} Z(t) = \Lambda Z(t) + P^{-1} B U(t) \quad \Lambda = P^{-1} A P \quad Z(t) = P^{-1} X(t) \qquad \cdots \ ( \ 7 \ )$$

, and

$$\Lambda = \begin{bmatrix} \lambda_1 & 0 & 0 \\ 0 & \ddots & 0 \\ 0 & 0 & \lambda_n \end{bmatrix} \qquad \cdots \ ( \ 8 \ )$$

The eigen value $\lambda$s (where $1 \leq s \leq n$) of the expression (8) is generally a complex number. A state equation whose eigenvalues are remarkably different in magnitude, is called as a Stiff equation, as described above.

As shown in the above expression (8), $\Lambda$ is a diagonal matrix in which diagonal elements are eigen values. Accordingly, the expression (2) can be treated as the following scalar simultaneous equation (9):

$$\frac{d}{dt} x_n(t) = \lambda_n x_n(t) + u_n(t) \qquad \cdots \ ( \ 9 \ )$$

In a case where the above expression (9) is numerically calculated, a predetermined computing step h is introduced and a difference equation is used to conduct approximate calculation. According to the conventionally known simple forward Euler's rule, the following expressions (10) and (11) are obtained:

$$x_{n+1} = x_n + h(\lambda x_n + u_n) \quad x_0 = x(0) \qquad \cdots \quad (1\ 0)$$

, and

$$x_{n+1} = x(t + h) \quad x_n = x(t) \quad u_n = u(t) \qquad \cdots \quad (1\ 1)$$

These expressions (10) and (11) might cause approximation errors, by which the computation results might be divergent depending on relationship between the original ordinary differential equation and the difference equation. In the forward Euler's rule of the above expressions (10) and (11), if the following conditional expression (12):

$$1 < |1 + h\lambda| \qquad \cdots \quad (1\ 2)$$

is satisfied, the following conditional expression (13) is obtained:

$$|x_n| < |x_{n+1}| \qquad \cdots \quad (1\ 3)$$

In accordance that n increases, values increase monotonously, finally becoming ∞/-∞. This is a state called a divergence.
The expression (2) is equivalent to the scalar simultaneous equation (9), so if even one eigen value of matrix A of the expression (2) satisfies the condition of conditional expression (12), the computation result of the expression (2) becomes divergent. In a case where the ordinary differential equation is the aforementioned Stiff equation, the condition of the conditional expression (12) is apt to be easily satisfied.

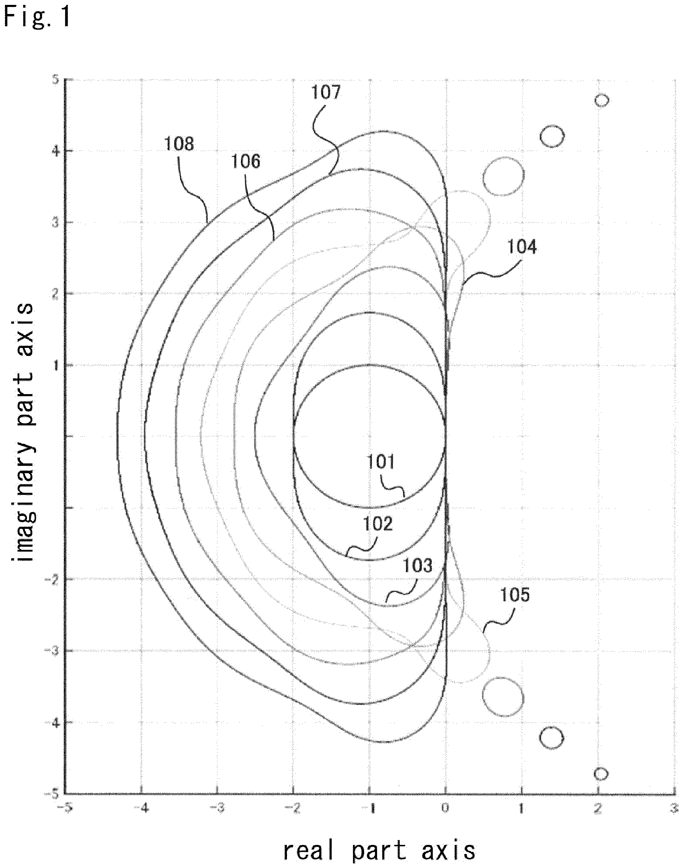

Fig. 1 is a view for explaining a complex plane region of eigen values λ that can be stably computed in h = 1 of the N-th-order matrix exponential approximation method defined in the above mentioned expression (6).
In Fig.1, the abscissa is the real part axis showing real part of the eigen value λ, and the ordinate is the imaginary part axis showing imaginary part of the eigen value λ.
The stable region curves 101 - 108 are respectively plots of the case of h=1 on the stable boundaries on which computation is possible with no divergence, where computations are made in cases of N = 1, 2, 3, 4, 5, 6, 7 and 8 in the above-mentioned expression (6).
In other words, if all eigen values λ of the coefficient matrix A to be computed are within the curves shown as the stable region given by N, computation with no divergence can be made by the expression (6) using N.
Meanwhile, λcan be calculated by the aforementioned expression (7) with use of the coefficient matrix A and the regular matrix P in expression (6).
It is noted here that the term "order" in the matrix exponential approximation method indicates the value of N in the expression (6) described above.
The above mentioned forward Euler rule of the expression (10) and (11) is the case of N=1 in the above expression (6), and this is called 1st order matrix exponential approximation where the order is 1.
As seen in Fig. 1, the larger the order N in the matrix exponential approximation method is, the larger the stable region is. If N=∞, the exact solution of the matrix exponential function can be obtained, and the left half plane region is the stable region and coincides with the stable region of the ordinary differential equation of continuous system.

<Stiff equation>

A consideration is made to a case where a state equation (ordinary differential equation) to which the LTI system shown in the above described expressions (7) and (8) can be assumed to be applied, is converted to a difference equation of, for example, the Runge-Kutta method to make a computing operation. In this case, it is known that, if the computation step h of discrete times in the difference equation and the eigen values λ of the matrix A in the difference equation are not appropriate, the computation result becomes divergent to positive infinite (+∞) or to negative infinite (-∞), as in the case of the above described forward Euler Rule. Conditions for solving the state equation stably with no divergence, are different depending on computation algorithm.

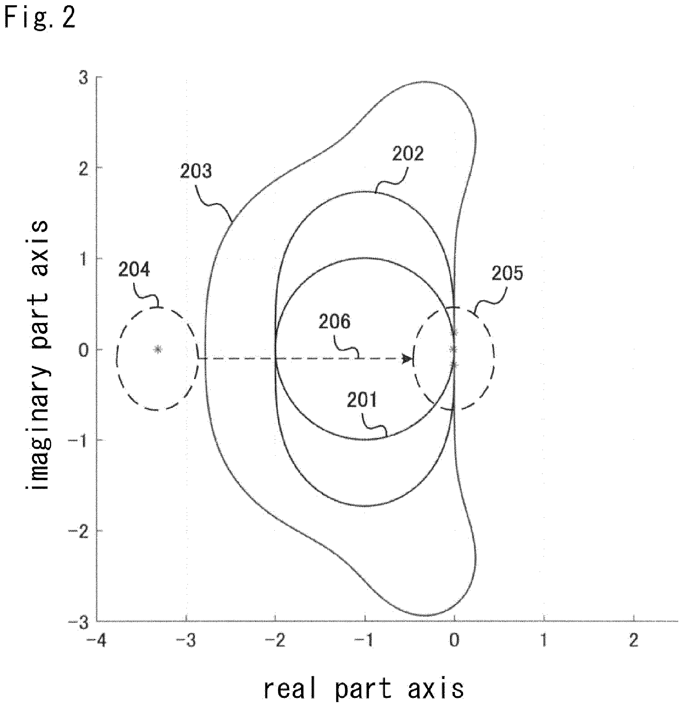

Fig. 2 is a view explaining a complex plane region of products hλ of eigen values λ multiplied by computing steps h, stably computable by the Runge-Kutta method.

In Fig.2, in the same way as Fig.1, the abscissa is the real part axis showing real part of the product $h\lambda$, and the ordinate is the imaginary part axis showing the imaginary part of the product $h\lambda$. The respective stable region curves 201, 202 and 203 are plots of the products $h\lambda$ on the stable boundaries on which computation is possible with no divergence, where the above mentioned differential equation (2) is solved by the first, second and fourth order Runge-Kutta method, that is a typical numerical computation method. In the computation of the product $h\lambda$, h denotes computation step for executing the Runge-Kutta method, and $\lambda$ is computed by the above mentioned expression (7) using the coefficient matrix A of the expression (2) and the regular matrix P.

For example, the fourth order Runge-Kutta method is shown by the following expressions (14):

$$X_n = X(t) \quad X_{n+1} = X(t+h) \quad u_n = u(t) \quad \text{where u(t) is constant in interval [t, t+h].}$$

$$k_n^1 = F(t, X_n)$$

$$k_n^2 = F(t + \frac{h}{2}, X_n + \frac{h}{2} \times k_n^1)$$

$$k_n^3 = F(t + \frac{h}{2}, X_n + \frac{h}{2} \times k_n^2)$$

$$k_n^4 = F(t + h, X_n + h \times k_n^3)$$

$$X_{n+1} = X_n + \frac{h}{6}(k_n^1 + 2 \times k_n^2 + 2 \times k_n^3 + k_n^4)$$

$$\cdot \cdot \cdot \quad (1\,4)$$

In Fig.2, the broken line region 204 is a region in which the product $h\lambda$ based on the eigenvalues of the Stiff equation is existent. The broken line region 205 is a region in which the product $h\lambda$ based on the eigenvalues that have a major influence on the characteristics of the time response is existent. In a case where the above mentioned Stiff equation is solved, if it is intended that no divergence occurs even if eigen values have large absolute values, it is necessary that the computation step h is made small so that the region 204 in which the product $h\lambda$ is existent may be inside of the stable region curves 201, 202 and 203. If the computation step h is made small, in Fig. 2, the region in which the product $h\lambda$ exists is displaced from the region 204 into the direction shown by the arrowed broken line 206 and enters inside the stable region curve 201, 202 or 203, and therefore it is possible to make computation with no divergence. However, in case where the computation step h is made small, the computation step becomes too small in the neighborhood of the region 205 where the products $h\lambda$ based on the eigen values whose absolute values having a major influence on the characteristics of the time response are small, are existent.

As a result, in a case where the computation step h is made small, computation errors are accumulated, and moreover, in the case of, for example, the HILS, there are cases where computation cannot be completed within a physical time meant by the computation step h.

In the above, the Runge-Kutta method which is applicable to solve a general ordinary differential equation like the expression (1) has been explained as an example. In a case where the ordinary differential equation is a linear state equation like the expression (2), the fourth order Runge-Kutta method explained using the above expression (14) is completely coincident with the case of N=4 of the matrix exponential approximation method expressed by the expression (6), and even in the matrix exponential approximation method the relationship of the computation step h with the stable region is established in the same way as in the Runge-Kutta method explained above.

<Numerical computation algorithm corresponding to Stiff equation>

The Runge-Kutta method as well as the matrix exponential approximation explained above, is a widely used numerically computing technique. However, stable regions of these numerical computing methods are limited. In the case of the Stiff equation, there is a problem that computation result becomes unstable and divergent, or excessively small computation step h has to be used.

In order to solve such a problem, there has been generally known a mathematically solving method for solving a backward differential equation known as a backward Euler method shown by the following expression (15), a trapezoidal method shown by the following expression (16) or a Gear method (mathematical expression being omitted), including entire left half area of a complex plane as stable computation region:

$$X_{n+1} = X_n + hF(t_n, X_{n+1}) \qquad \cdots \quad (1\,5)$$

$$X_{n+1} = X_n + \frac{h}{2}\big(F(t_n, X_n) + F(t_{n+1}, X_{n+1})\big) \qquad \cdots \quad (1\,6)$$

These solving methods are called as implicit methods, which require $X_{n+1}$ for acquiring $X_{n+1}$, and it is not easy to perform computation. In other words, in a case where the ordinary differential equation is a linear equation as shown by the expression (2), it is necessary to compute inverse matrix. It is generally said that, in a case of "n x n" matrix, load for performing computation of inverse matrix is proportional to the third power of n. Accordingly, if n is large, the computation lord is quite high.

Further, if the ordinary differential equation is a general non-linear function as shown by the equation (15) or (16), repeated computations as required by Newton method are needed. In this case also, computation load is quite high.

Therefore, there have been problems that these solutions are not suitable for the HILS that requires real time computation, and are not suitable either for conducting the SILS that requires long verification time for the control device.

In a case where the HILS that is called as a real time simulator, is applied to solve an ordinary differential equation, it is required to finish computation within a predetermined time. For this reason, it is hard to adopt an algorithm requiring large computation load such as Euler method, trapezoidal method or Gear method. Further, it is required to finish completely computation within a predetermined time with no failure, so it is difficult to adopt an algorithm requiring computation time that is not constant but variable, such as repeated computations like in case of Newton method.

In the case of the SILS also, there is a problem that its long simulation time causes deterioration in development efficiency. In a case where the HILS is applied after verification has been conducted by the SILS, verification accuracy is deteriorated because of differing in computation algorithm.

Furthermore, as described above for the computation step h, the backward Euler method takes a first order approximation accuracy, so computation accuracy is low. In the trapezoidal method, since it takes a second order approximation accuracy, there is a problem that, for eigen values which are far from the origin, solutions oscillate but do not converge even when the solutions inherently converge to a constant. In case of the Gear method, if the order is increased, the stable region becomes small, and unstable region remains in left half plane area which is stable region of the serial system ordinary differential equation. Therefore, it is obliged to say that there is no computation algorithm which can satisfactorily solve a Stiff equation.

The computation algorithm according to the present embodiment explained below is characterized in having computation load equivalent to the computation load of the forward Euler method whose computation load is lowest, while having quite large stable computation area on the complex plane. The embodiment of the present invention will be described in detail below:

<Yummy method>

At first, the operation principle of the present embodiment will be explained. In the N-th order matrix exponential approximation method, the larger the order N is, the larger the computation load for computing the matrix exponential function is, so in such cases other approximation method such as Pade approximation or the like is often used. However, in cases where, in the expression (2), the coefficient matrix A is constant and not variable and computation step h is constant, series portions of the aforementioned expression (5) are constants. In this case, for the series portions used in the matrix exponential approximation method, only one computation is enough during a certain time period in which the matrix A is invariable.

In the SILS also, this characteristic is useful. In particular in case where the present invention is applied to the HILS, it is enough to make computation in a preparatory stage before the real time operation or prior to driving the system owing to this characteristic. In this case, there is no problem practically even if, for example, several seconds are required for computing series portions of the aforementioned expression (5).

Therefore, even if the computation load is quite high such as N=20 or N=100 in the above-mentioned expression (6), the matrix exponential approximation method is a useful computation technique, since there is no problem in practical usage.

However, it narrows the application range that the computation step h is constant. For example, in the conventional numerical computation technique that is known as "partially variable step method" proposed in the below Literature Documents 1 and 2 by the inventor of the present application, circuit behavior is accurately computed in response to switching timing of a switching circuit, and accordingly computation step $h_f$ is a measured value at a time point of real time driving.

<Literature Document No. 1>: KIDOKORO Hitoshi & NAKAHARA Masatoshi, "High Speed Computation Technique based on Explicit Method Realizing Real Time Simulation of DC/DC Convertor", IEICE Transactions on Communications, Vol. J97-B, No.6, pp.- June. 2014.

<Literature Document No. 2>: KIDOKORO Hitoshi & NAKAHARA Masatoshi, "Real Time Simulation of Switching Convertor using FPGA", IEICE Transactions on Communications, Seminar Material (Research Report) EE2013-55.

In accordance with the numerical computation technique according to the present embodiment, predetermined constant $h_{exp}$ (corresponding to h in the said Literature Documents) and variables h (corresponding to $h_f$ in the said Literature Documents) varying based on the measured values are separated, and the computations based on the below expressions (17), (18) or (19), are executed.

Hereinafter, this numerical computation technique according to the present embodiment is called "Yummy method", and $A_{ym}$ matrix calculated by the expression (17) is called "Yummy matrix".

$$A_{ym} = \left( I + \frac{1}{2} h_{exp} A + \frac{1}{3!} \left( h_{exp} A \right)^2 + \cdots + \frac{1}{N!} \left( h_{exp} A \right)^{N-1} \right) = I + \sum_{k=2}^{N} \frac{1}{k!} \left( h_{exp} A \right)^{k-1}$$

$$\cdots (1\ 7)$$

$$X_{n+1} = X_n + h A_{ym} (A X_n + B u_n) \qquad \cdots (1\ 8)$$

$$X_{n+1} = X_n + h \left( \left( A_{ym} A \right) X_n + \left( A_{ym} B \right) u_n \right) \qquad \cdots (1\ 9)$$

$$X_n := x(t) \quad X_{n+1} := x(t + h) \qquad \cdots (2\ 0)$$

Yummy Matrix $A_{ym}$ in the above expression (17) is a constant that can be computed in advance. Therefore, Yummy Matrix $A_{ym}$ may be computed in advance and be stored, in case of the SILS, only one time at first, or, in case of the HILS, before the control device is connected and the real time operation starts.

What is computed in real time is the expression (18).

Further, as seen in the expression (19), in case where constant coefficient matrix $A_{ym}A$ and coefficient matrix B if be assumed to be constant, constant coefficient matrix $A_{ym}B$ also is computed in advance. Scale of the computation in this case is equivalent to that of the forward Euler method shown by the abovementioned expressions (10) and (11). Accordingly, the technique using the formula of the expression (19) is a numerical computation method whose computation load is lowest among the known computation methods.

Meanwhile, the form of the expression (20) shows the correspondence with the serial system, and h denotes the size of the computing step.

Next, the embodiment of the present invention on the basis of the said operation principle will be described below in detail. In the embodiment of the present computing device, a convertor device generating a predetermined electric voltage in accordance with ON/OFF timings of pulse signals is simulated as a device to be controlled.

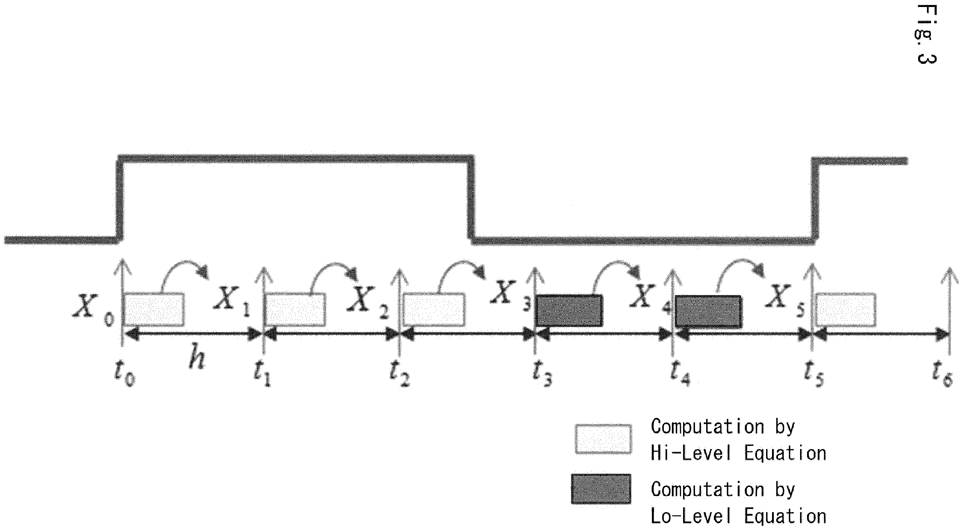

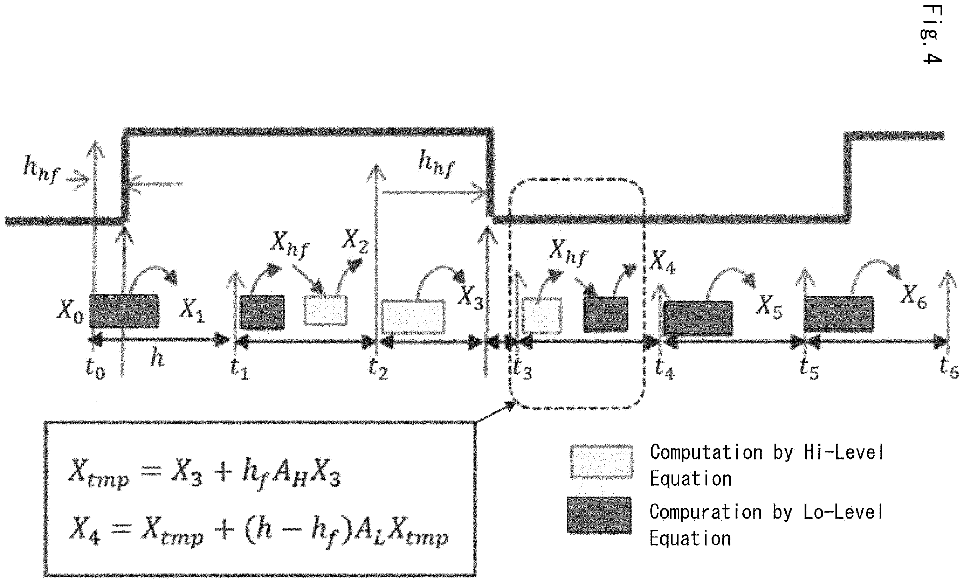

At first, a fundamental problem in a case where ON/OFF timings of pulse signals are treated will be explained. Fig. 3 is a view explaining a simulation of a converter circuit according to a fixed step method. Fig. 4 is a view explaining a simulation of the converter circuit according to a partially variable step method. Fig. 3 and Fig.4 are, both, based on the aforementioned Literature Documents No.1 and No.2.

Normally, in the HILS which requires real time computation, a fixed step method as shown in Fig.3 is used in which computation time h is made constant. However, in a case where a convertor device operating in accordance with ON/OFF pulse timings is simulated, there is the following problem. That is, in this case, resolution of pulse time = computation step time = h, so resolution of pulse time, that is, temporal resolution of ON/OFF pulse timings of the convertor device is remarkably deteriorated.

On the other hand, the SILS has no restriction with respect to real time, but it is general to conduct a similar computation to the HILS to be consistent with the SILS. For this reason, the SILS has a similar problem to that as above mentioned with respect to the HILS.

The inventor of the present application has proposed a technique that can remarkably improve resolution of the ON/OFF pulse time, called as partially variable step method, in the above-mentioned Literature Documents No.1 and No.2. According to this technique, as shown in Fig. 4, computations are made at constant computing time interval h basically, but in case where ON/OFF timings of pulse signals are varied, time interval $h_f$ is measured, and computation using this time interval $h_f$ is executed.

<Concrete Embodiment>

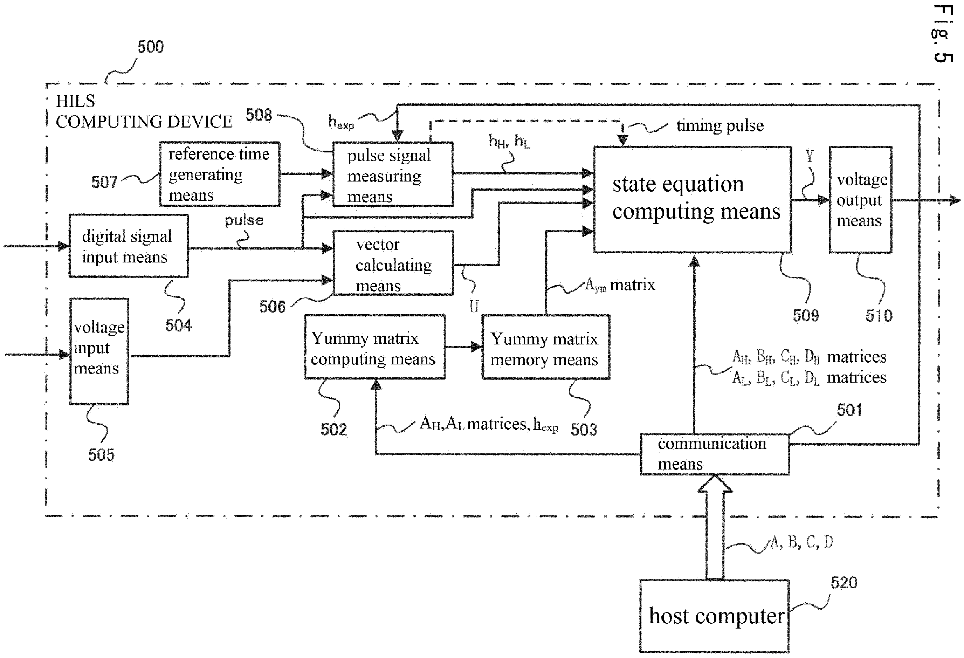

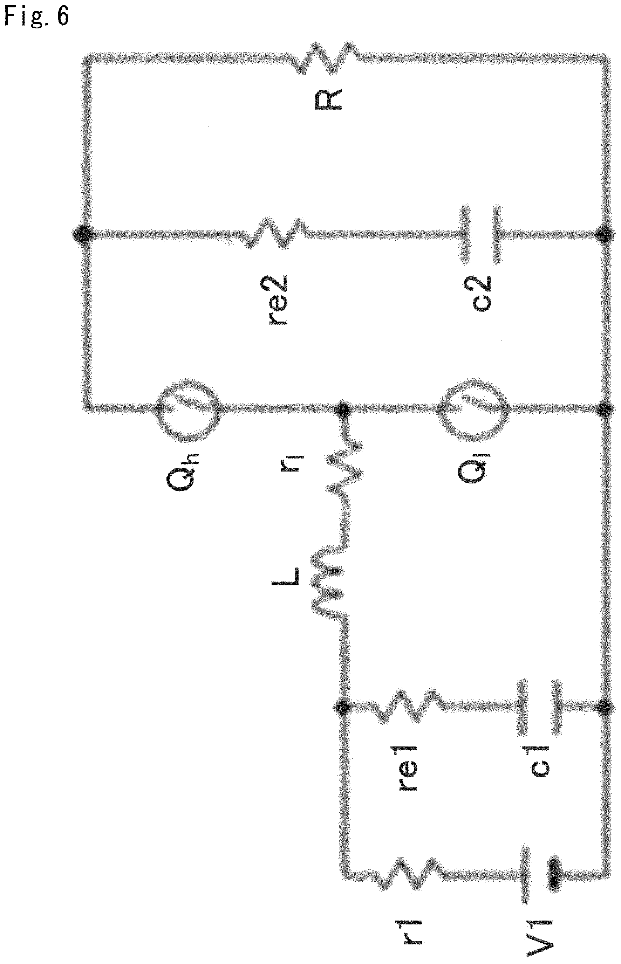

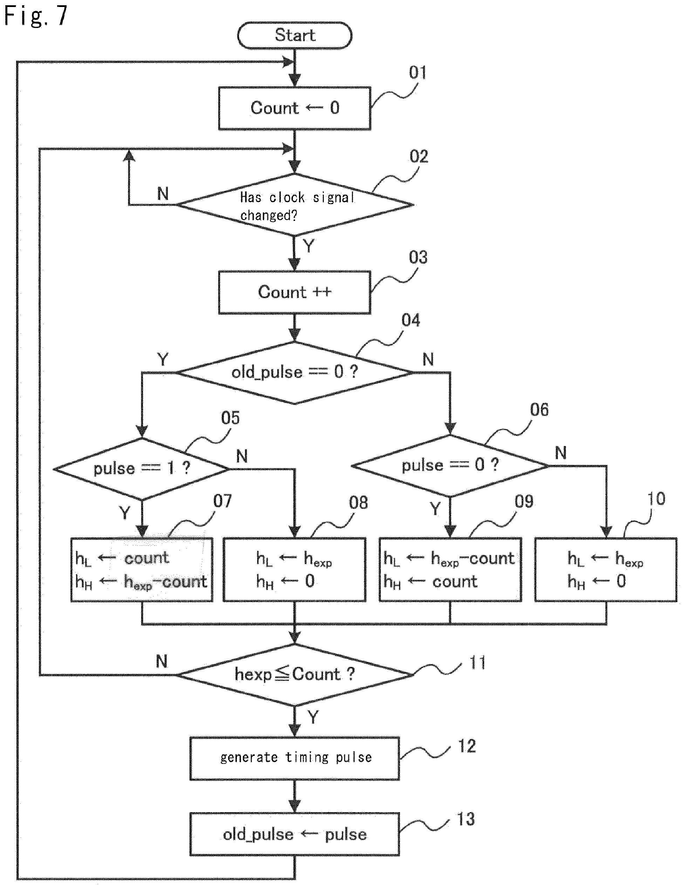

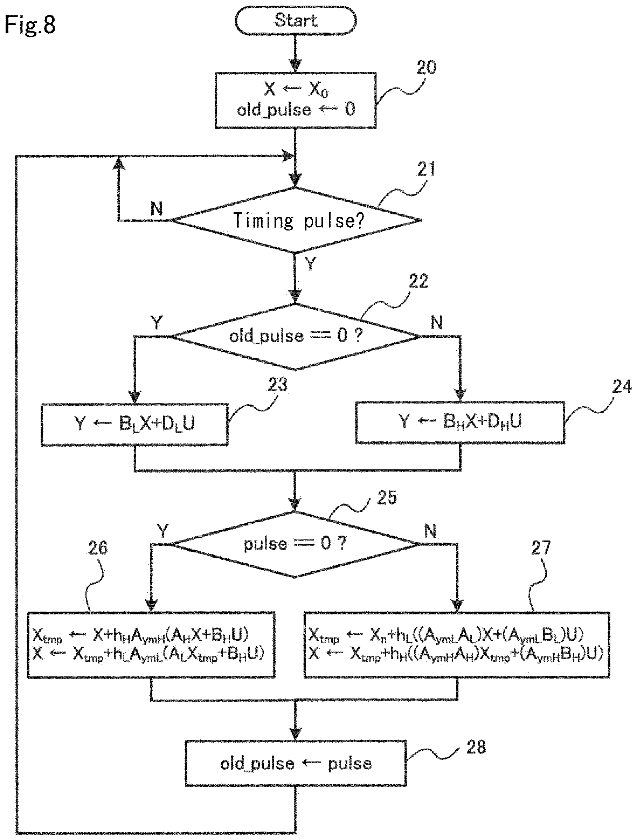

An embodiment of a computer device adopting the aforementioned computation method, will be explained concretely with referring to Fig.5, Fig.6, Fig.7 and Fig.8. Fig. 5 is a view showing a block diagram of an embodiment of the computing device 500 that is an embodiment of the present invention. Fig. 6 is a view explaining an example of a circuit diagram of a converter device that is an object to be simulated. Fig. 7 shows a flowchart of a processing example of a pulse signal measuring means 508 in the computing device 500 shown in Fig.5. Fig. 8 shows a flowchart of a processing example of a state equation computing means 509 in the computing device 500 shown in Fig. 5.

Fig. 5 shows the block diagram of the computing device 500 that is an embodiment of the present invention. The computing device 500 is an embodiment of the so-called HILS, for example, and has physical signal inputting/outputting means. The computing device 500 simulates, as an object to be controlled, a convertor device that generates predetermined electric voltages in accordance with pulse signals from the un-illustrated control device. Hereinafter, this computing device is called as the HILS computing device 500.

The HILS computing device 500 comprises a CPU (central processing unit), a ROM (read only memory), a RAM (random access memory), a flash memory mounting device, and the like, though not shown, as hardware of a so-called embedded computer.

In the HILS computing device 500 shown in Fig.5, communication means 501 is a so-called Ethernet, CAN (Control Area Network) communication or the equivalent thereto.

Yummy matrix computing means 502, Yummy matrix memory means 503, vector calculating means 506, pulse signal measuring means 508, and state equation computing means 509 form a functional block group by which said CPU reads and executes HILS control program stored in the memory card mounted on the flash memory device.

A reference time generating means 507 is a hardware of a timer device built in the computer of the HILS computation device 500.

The input/output interface device is composed of digital signal input means 504, voltage input means 505 and voltage output means 510.

The communication means 501 is communicatively connected to a host computer 520 through a network, such as, a local area network as well as an internet network, or a dedicated communication line.

The digital signal input means 504 and the voltage input means 505 operate as physical input means of the computing device side, and are connected to a digital signal output means and a voltage output means of the control device sided physical output means of the unillustrated control device.

The digital signal input means 504 monitors the respective voltages of a plurality of signal lines from the control device, and sends digital signal "1" when the voltage is beyond the predetermined threshold value and "0" when the voltage is not beyond the predetermined threshold value, to the vector calculating means 506 and the pulse signal measuring means 508.

The voltage input means 505 has, for example, a plurality of built-in analog/digital converters to convert a plurality of analog input voltage values from the control device to digital input voltage values and send the respective digital input voltage values to the vector calculating means 506.

The vector calculating means 506 calculates an input vector U (corresponding to U(t) in the aforementioned expression (2)), which comprises, as vector element, the value "1" or the value "0" of the plurality of the digital input signals and the plurality of the digital input voltage values. Meanwhile, the value "1" is set as the first element of the input vector U. This first element is used for generating an arbitrary constant by the value of coefficient matrix B in case where the state equation requires constant term (BU(t) of the aforementioned expression (2) = constant).

On the other hand, the host computer 520 may be a generally used personal computer, which can execute, for example, a program of a circuit simulation software for generating a mathematical model simulating the convertor device of the HILS. In a case where user wants to select a convertor device as an object to be controlled and to generate a mathematical model thereof, a circuit diagram of a boost convertor as shown in Fig.6, for example, is made using a key board, mouse and display of the host computer 520.

The circuit shown in Fig.6 is equipped with a high-side switch $Q_h$ and a low-side switch $Q_l$, which turns ON and OFF alternately. For example, when externally inputted pulse width modulation signal PWN is in high level, $Q_h$ turns ON

and $Q_l$ turns OFF, and when externally inputted pulse width modulation signal PWN is in low level, $Q_h$ turns OFF and $Q_l$ turns ON.

The circuit simulation software, in the circuit shown in Fig.6, is so set to have resistance $r_{sh}$ when the switch element $Q_h$ turns ON and resistance $r_{sl}$ when the switch element $Q_l$ turns OFF. This software generates matrix A and matrix B of the state equation shown by the expression (2) and matrix C and matrix D forming the output equation by the expression (25) shown below, in accordance with the descriptions recited in the aforementioned Literature Documents No.1 and No.2, for example, by conducting computations of the following expressions (21) to (27). Meanwhile, the expression (2) is simplified as the below expression (21).

$$\frac{d}{dt}X = AX + BU \qquad \cdots \ (2\,1)$$

$$U = \begin{bmatrix} 1 \\ V1 \end{bmatrix} \qquad \cdots \ (2\,2)$$

$$A = \begin{bmatrix} \dfrac{-1}{L}\left(r_l + \dfrac{R_1 r_{e1}}{R_1 + r_{e1}} + \dfrac{r_{sl} r_{sh}}{R^S} + \dfrac{r_{sl}}{R^S}\dfrac{R_2 r_{e2}}{R_2 + r_{e2}}\right) & \dfrac{1}{L}\dfrac{R_1}{R_1 + r_{e1}} & \dfrac{-r_{sl}}{LR^S}\dfrac{R_2}{R_2 + r_{e2}} \\[3ex] \dfrac{-1}{C_1}\dfrac{R_1}{R_1 + r_{e1}} & \dfrac{-1}{C_1}\dfrac{1}{R_1 + r_{e1}} & 0 \\[3ex] \dfrac{r_{sl}}{C_2 R^S}\dfrac{R_2}{(R_2 + r_{e2})} & 0 & \dfrac{-1}{C_2}\dfrac{1}{(R_2 + r_{e2})} \end{bmatrix}$$

$$\cdots \ (2\,3)$$

$$R^S = r_{sl} + r_{sh}$$

$$B = \begin{bmatrix} 0 & \dfrac{1}{L}\dfrac{r_{e1}}{R_1 + r_{e1}} \\[2ex] 0 & \dfrac{1}{C_1}\dfrac{1}{R_1 + r_{e1}} \\[2ex] 0 & 0 \end{bmatrix} \qquad \cdots \ (2\,4)$$

$$Y = CX + DU \qquad \cdots \ (2\,5)$$

$$C = \begin{bmatrix} \dfrac{r_{sl} r_{e2} R^C}{R_2 + r_{e2}(1 + R^C)} & 0 & \dfrac{R_2}{R_2 + r_{e2}(1 + R^C)} \end{bmatrix}$$

$$\cdots \ (2\,6)$$

$$R^C = R_2 / R^S$$

$$D = \begin{bmatrix} 0 & \dfrac{r_{e2}}{R_2 + r_{e2}(1 + R^C)} \end{bmatrix} \qquad \cdots \ (2\,7)$$

The aforementioned circuit simulation software so sets the circuit shown in Fig.6 to, in the case where the external signal is in high level (Hi), have resistance $r_{sh}$ when the switch element $Q_h$ turns ON, and resistance $r_{sl}$ when the switch element $Q_l$ turns OFF. By this software, matrices A, B, C and D are formed by operations of the expressions (21) to (27) and these matrices are outputted as matrices $A_H$, $B_H$, $C_H$ and $D_H$.

The aforementioned circuit simulation software so sets the circuit shown in Fig.6, in the case where the external signal is in low level (Lo), to have resistance $r_{sh}$ when the switch element $Q_h$ turns OFF, and resistance $r_{sl}$ when the switch element $Q_l$ turns ON. By this software, matrices A, B, C and D are formed by operations of the equations (21) to (27), and these matrices are outputted as matrices $A_L$, $B_L$, $C_L$ and $D_L$.

Further, by the aforementioned circuit simulation software, the eigen value decompositions of the matrices $A_H$ and $A_L$, are performed, respectively, and constant computation steps $h_{exp}$, are calculated in accordance with predetermined procedures on the basis of the obtained respective eigen values.

As a result of the above operations, the host computer 520 produces, for example, as outputs therefrom, ON time coefficient matrices $A_H$, $B_H$, $C_H$ and $D_H$ composing the state equation of the expression (2) when pulse signals inputted to the digital signal input means 504 are in high level (ON), OFF time coefficient matrices $A_L$, $B_L$, $C_L$ and $D_L$ composing the state equation of the expression (2) when pulse signals inputted to the digital signal input means 504 are in low level (OFF), and constant computing steps $h_{exp}$ that are predetermined constants. These data are received by the communication means 501 that is equation setting means in the HILS computing device 500 and are stored.

In the HILS computing device 500 shown in Fig. 5, Yummy matrix computing means 502 that is an advance computing means, receives the aforementioned coefficient matrices $A_H$ and $A_L$ and constant computing step $h_{exp}$ which the communication means 501 has received, computes Yummy matrices $A_{ymH}$ and $A_{ymL}$ by operations of the expression (17) based on these received data, and stores the respective Yummy matrices in the Yummy matrix memory means 503. The Yummy matrix memory means 503 sends the stored Yummy matrices $A_{ymH}$ and $A_{ymL}$ to the state equation computing means 509.

In the HILS computing device 500, for example, if the HILS simulation starts, the digital signal input means 504 acquires pulse signals from the unillustrated control device. The digital signal input means 504 converts the input signals to values "0" or "1", and sends them as value of variable pulse to pulse signal measuring means 508 and vector calculating means 506. The vector calculating means 506 forms a vector U in which numerical values given as above-mentioned are the respective elements. Meanwhile, the first element of the vector U is constant, and is always set to "1".

Next, the operation of the pulse signal measuring means 508 shown in Fig.5, will be explained. Fig. 7 is a flowchart showing a processing example of the pulse signal measuring means 508. At first, the value of the variable Count is reset to "0" (step 01 in Fig.7). Meanwhile, in the description below, "variable" is stored in an unillustrated RAM or the like composing the computer device 500.

Next, signals from the reference time generating means 507 in the HILS computing device 500, are examined and waited until being varied (judgement "NO" (shown as "N") in step 02 in Fig.7 is repeated.).

When signal from the reference time generating means 507 has varied and judgement in step 02 has changed to YES ("Y" in Fig.7), the value of the variable Count is incremented by +1 (shown by "++") (step 03 in Fig.7).

Next, judgement is made whether the value of variable old_pulse is "0" or not ("==" is an arithmetic symbol showing "equal"). (Step 04 in Fig. 7).

If judgement in step 04 is YES, judgement is made whether the value of the variable pulse given by the digital signal input means 504 is "1" or not (step 05 in Fig. 7).

If judgement in step 05 is YES, it is assumed that the PWM signal has changed, and setting process shown by the below expression (28) are executed (step 07 in Fig. 7).

$$h_L \leftarrow count$$
$$h_H \leftarrow \left(h_{exp} - count\right) \qquad \cdots \ (2\,8)$$

If judgement in step 05 is NO, it is assumed that the PWM signal is in low level Lo and has not changed, and setting process shown by the below expressions (29) are executed (step 08 in Fig. 7):

$$h_L \leftarrow h_{exp}$$
$$h_H \leftarrow 0 \qquad \cdots \ (2\,9)$$

If judgement in step 04 is NO, judgement is made whether the value of the variable pulse given by the digital signal input means 504 is "0" or not (step 06 in Fig. 7).

If judgement in step 06 is YES, it is assumed that the PWM signal has changed and setting process shown by the below expression (30) are executed (step 09 in Fig. 7). Here, "count" in the expressions (30) means a value set in the variable count.

$$h_L \leftarrow \left(h_{exp} - count\right) \qquad \cdots \ (3\,0)$$
$$h_H \leftarrow count$$

If judgement in step 06 is NO, it is assumed that the PWM signal is in high level Hi and has not changed, and setting process shown by the below expressions (31) are executed (step 10 in Fig. 7).

$$h_L \leftarrow 0 \qquad \cdots \ (3\ 1)$$
$$h_H \leftarrow h_{exp}$$

After the steps 07, 08, 09 or 10, it is judged whether or not value of the variable Count is equal to or greater than $h_{exp}$ (step 11 in Fig.7).

If judgement in step 11 is NO, flow returns to step 02 and processing similar to mentioned above is repeated.

If judgement in step 11 has become YES, timing pulse is sent to the state equation computing means 509 (step 12 in Fig.7).

If the Count = $h_{exp}$, judgement in step 11 is YES, and timing pulse is generated at time interval of $h_{exp}$.

After step 12, content of the variable pulse is set to the variable old_pulse (step 13).

After step 13, the flow returns to step 01 and value of the variable Count is reset to "0". Thereafter, processing similar to the above is repeated.

By the processing described above, the below relationships are assured:

$$h_{H} \leq h_{exp} \quad , \qquad h_{L} \leq h_{exp}$$

Since the value of the variable pulse has been set to the variable old_pulse in the step 13, such an action that the PWM signals cause so-called chattering during time interval $h_{exp}$, thereby causing repeats of high level Hi and low level Lo in short time, is ignored. Only in a case where time exceeds the time interval $h_{exp}$, that is, time in which high level Hi or low level Lo has continued, change in the PWM signal is recognized, and that change is reflected to value of $h_H$ and $h_L$.

Next, the operation of the state equation computing means 509 shown in Fig.5, will be explained. Fig. 8 is a flowchart showing a processing example of the state equation computing means 509 in Fig.5. At first, the initial value Xo is given to the state variable vector X, and the variable old_pulse is set to "0" (step 20 in Fig.8).

Next, timing pulse given by the pulse signal measuring means 508 is waited (judgement "NO" in step 21 of Fig.8 is repeated).

If timing pulse is inputted and judgement in step 21 has become YES, judgement is made whether value of the variable old_pulse is "0" or not (step 22 in Fig. 8).

If judgement in step 22 is YES (value "0"), the pulse in the last processing was in low level Lo, so output variable vector Y is calculated by the operation of the following expression (32) (step 23 in Fig. 8):

$$Y \leftarrow B_L X + D_L U \qquad \cdots \ (3\ 2)$$

If judgement in step 22 is NO (value "1"), the pulse in the last processing was in high level Hi, output variable vector Y is calculated by the operation of the following expression (33) (step 24 in Fig. 8):

$$Y \leftarrow B_H X + D_H U \qquad \cdots \ (3\ 3)$$

Next, judgement is made whether value of the variable pulse is "0" or not (step 25 in Fig.8).

If judgement in step 25 is YES (value "0"), the computations shown by the following expressions (34) and (35) are executed (step 26).

Incidentally, timing pulse is waited in the step 21, and the timing pulse is generated at time interval $h_{exp}$ in the step 12 shown in Fig. 7, so the following processing is carried out at time interval of $h_{exp}$.

$$X_{tmp} \leftarrow X + h_H A_{ymH}(A_H X + B_H U) \qquad \cdots \ (3\ 4)$$

$$X \leftarrow X_{tmp} + h_L A_{ymL}(A_L X_{tmp} + B_H U) \qquad \cdots \ (3\ 5)$$

If judgement in step 25 is NO (value "1"), the operations shown by the following expressions (36) and (37) are executed (step 27):

$$X_{tmp} \leftarrow X_n + h_L\big((A_{ymL}A_L)X + (A_{ymL}B_L)U\big) \qquad \cdots \; (3\,6)$$

$$X \leftarrow X_{tmp} + h_H\big((A_{ymH}A_H)X_{tmp} + (A_{ymH}B_H)U\big) \qquad \cdots \; (3\,7)$$

At this time, if the PWM signal has changed to Lo from Hi, processing of the step 26 is conducted, and computations using $A_{ymH}$ and $A_H$ are performed, followed by computations using $A_{ymL}$ and $A_L$.

Processing in step 26 is made in synchronous with timing pulse generated at time interval of $h_{exp}$ in step 21, so processings for updating state variable vector X at time intervals $h_{exp}$ are performed twice.

On the other hand, the computation of output variable vector is performed only once in step 23 and step 24. In other words, with respect to value of state variable vector $X_{tmp}$ calculated in steps 26 and 27, output variable vector Y is not computed and is not outputted as an output voltage from voltage output means 510 of the HILS computing device 500 described later.

Meanwhile, if the PWM signal does not change from Lo to Hi, but maintains in low level Lo, then $h_H$ = 0. This is equivalent to a case where only the expression (35) is computed, but the expression (34) also is computed in order to make the computation load constant.

Computation in step 27 is in the case where the abovementioned high level Hi and low level Lo are reversed.

After step 26 or 27, value of variable pulse is set to the variable old_pulse. Thereby, PWM pulse at the time when state variable vector X is calculated is in high level Hi or in low level Lo is stored to be used as the basis for the judgement in step 22.

Referring to Fig.5, voltage output means 510 outputs voltage corresponding to output variable vector Yn outputted from the state equation computing means 509. Meanwhile, this voltage is updated at time interval in which the output variable vector Y is updated, that is, at time interval $h_{exp}$. Although not shown in Fig.5, analog voltage value converted from digital voltage signal through digital/analog convertor in the voltage output means 510, is inputted to a control device side physical input/output means of the control device.

The control device interprets this analog voltage value as signal from a sensor device set in the object to be controlled, judges behavior of the object to be controlled and outputs a predetermined control output.

This control output is inputted to the digital signal input means 504 or the voltage input means 505 of the HILS computing device 500. Thus, a feedback closed loop is formed between the control device and the HILS computing device 500 that is the object to be controlled. As a result, the HILS computing device 500 in Fig.5 simulates the convertor device shown as the circuit diagram in Fig.6, and can give the control device the object to be controlled.

<Stable Region of Yummy method>

According to Yummy method, computations are performed in accordance with the aforementioned expressions (17), (18) and (19), and stable regions are defined in the same relationship as described with respect to the aforementioned expression (7) to the expression (11). At this time, if $h = h_{exp} = 1$, the stable regions are as shown in Fig.1, but if $h \neq h_{exp}$, the stable region differs therefrom.

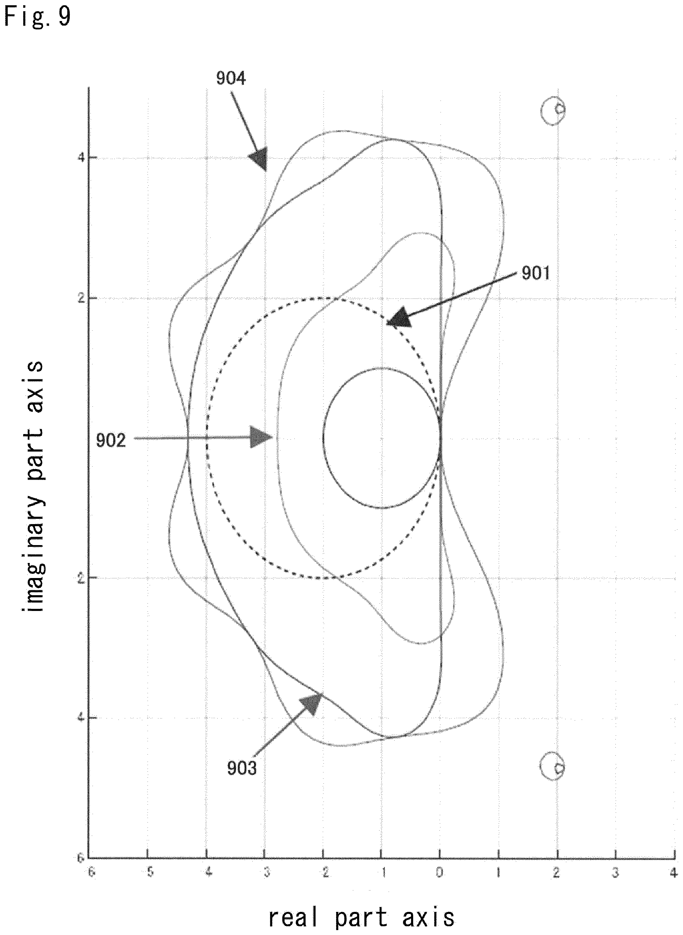

Fig.9, Fig.10 and Fig.11 are views explaining stable regions of the Yummy method according to the present embodiment. In each of Fig.9 to Fig.11, in the same way as in Fig.1, the abscissa is the real part axis showing real parts of the eigen values $\lambda$, and the ordinate is the imaginary part axis showing imaginary parts of the eigen values $\lambda$.

In Fig.9, 901 denotes a stable region curve of the forward Euler method (h = 0.5). 902 denotes a stable region curve of a matrix exponential approximation method (N=4, h=1). 903 denotes a stable region curve of a matrix exponential approximation method (N=8, h=1). 904 denotes a stable region curve of the Yummy method (N=8, $h_{exp}$ =1, h=0.5) according to the present embodiment.

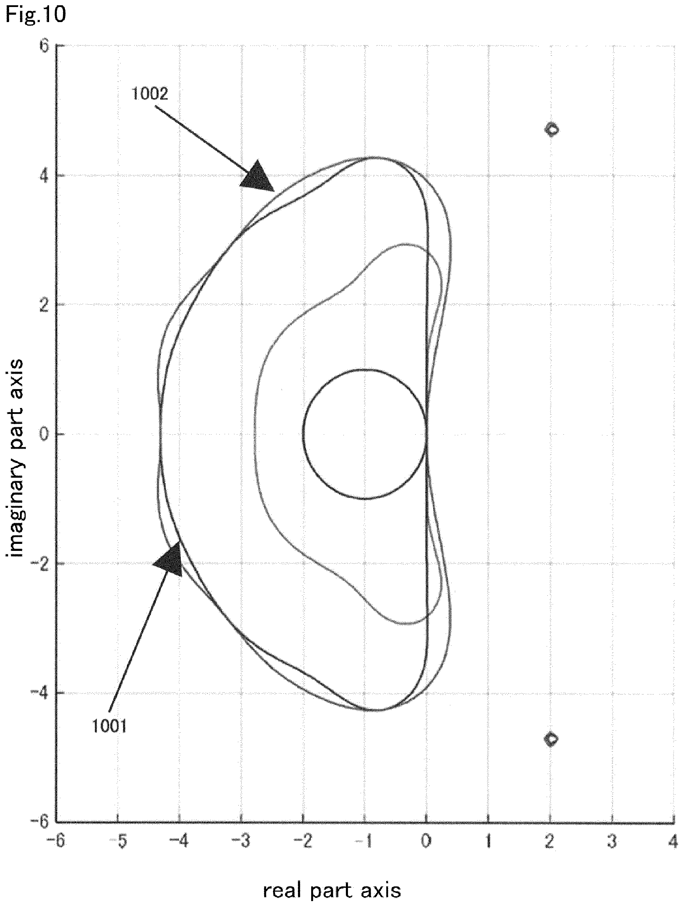

In Fig. 10, 1001 denotes a stable region curve of a matrix exponential approximation method (N=8, h=1). 1002 denotes a stable region curve of the Yummy method (N=8, $h_{exp}$ =1, h=0.8) according to the present embodiment.

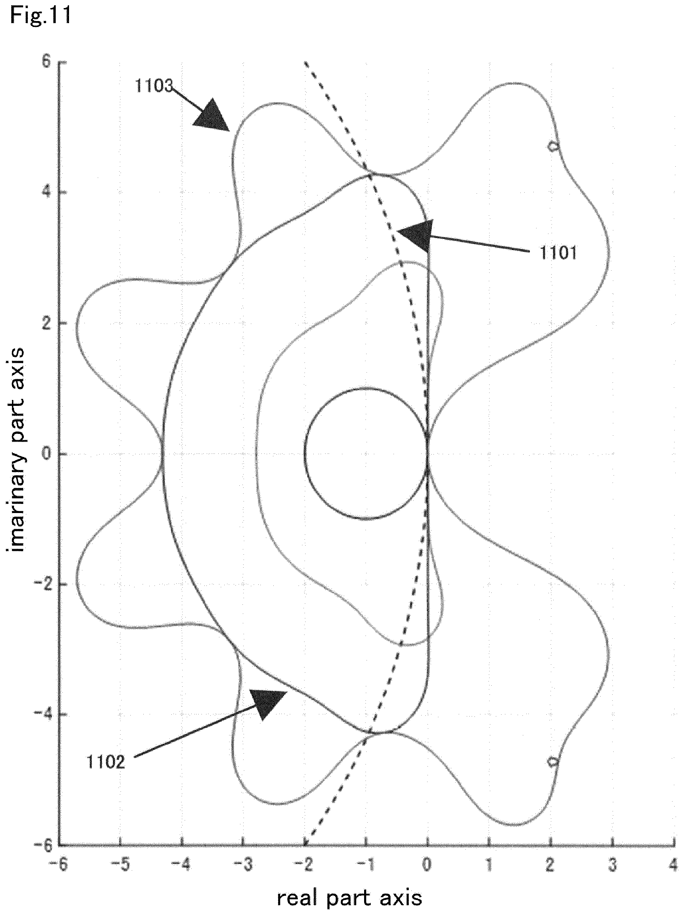

In Fig. 11, 1101 denotes a stable region curve of the forward Euler method (h= 0.1). 1102 denotes a stable region curve of a matrix exponential approximation method (N=8, h=1). 1103 denotes a stable region curve of the Yummy method (N=8, $h_{exp}$ =1, h=0.1) according to the present embodiment.

If all eigen values of A matrix of the aforementioned expression (2) are within the stable region inside each of the respective stable region curves, computations of the state equation in the state equation computation means 509 are stable.

As shown in Fig.9, Fig.10 and Fig.11, if h is smaller than $h_{exp}$ ($h < h_{exp}$), stable regions obtained by the Yummy method are always large in case of computation step size hexp in the N-th-order matrix exponential approximation method shown as the expression (6). Therefore, in the embodiment shown in Fig.5, the host computer 520 computes eigen values of coefficient matrices $A_H$ and $A_L$, and determines $h_{exp}$ and order N so that all of computed eigen values may be within the stable regions of the N-th order discontinued or truncated matrix exponential approximation, and send them to the HILS computing device 500. The pulse signal measuring means 508 shown in Fig.5 can determine computation step size to be $h_{exp}$ in the case where $h_H$ or $h_L$ is larger than $h_{exp}$. Accordingly, operations solving the state equation in the computing means 509 will not become unstable.

<Proof why Yummy method is stable>

The reason why the Yummy method is stable, that is, the reason why stable region acquired by the Yummy method, in case of $h < h_{exp}$, is larger than that acquired by the N-th order matrix exponential approximation method in which computation step size is $h_{exp}$, will be explained, below:

The expression (17) is equivalent to scalar simultaneous equations, like expression (7) to (11), so hereinafter scalar expressions are used as below. External input value u is not relevant to analysis of stability, so omitted.

$$x_{n+1} = \left( 1 + h\lambda \sum_{k=1}^{N} \frac{(h_{exp}\lambda)^{k-1}}{k!} \right) x_n$$

Accordingly, if the following conditional expression (38) is satisfied, computation is stable;

$$\left| 1 + h\lambda \sum_{k=1}^{N} \frac{(h_{exp}\lambda)^{k-1}}{k!} \right| \leq 1 \quad \cdots \quad (3\,8)$$

$$\left| 1 + h\lambda \sum_{k=1}^{N} \frac{1}{k!} (h_{exp}\lambda)^{k-1} \right| = \left| 1 + \frac{h}{h_{exp}} \sum_{k=1}^{N} \frac{1}{k!} (h_{exp}\lambda)^{k} \right| = |1 + h\Omega(\lambda)|$$

$$\Omega(\lambda) = \frac{1}{h_{exp}} \sum_{k=1}^{N} \frac{1}{k!} (h_{exp}\lambda)^{k}$$

With respect to a certain $\lambda$ satisfying $|1 + h_{exp}\Omega(\lambda)| \leq 1$ , if $\Omega(\lambda) = \alpha + bi$, we obtain:

$$\left| 1 + h_{exp}(a + bi) \right| = \sqrt{\left( 1 + h_{exp}a \right)^2 + \left( h_{exp}b \right)^2} \leq 1 \qquad \cdots \quad (3\,9)$$

$$h_{exp}^{2}(a^2 + b^2) + 2h_{exp}a \leq 0$$

on the other hand, in case of $|1 + h\Omega(\lambda)|$ $0 < h < h_{exp}$,

$$|1 + h\Omega(\lambda)|^2 = h^2(a^2 + b^2) + 2ha + 1.$$

Based on the following conditions:

$$h^2(a^2 + b^2) \leq h_{exp}^{2}(a^2 + b^2) \qquad 2ha < 2h_{exp}a$$

We obtain:

$h^2(a^2 + b^2) + 2ha \leq 0$ Equality holds when $a = b = 0 \Rightarrow \Omega(\lambda) = 0$ Accordingly, $|1 + h(a + bi)| \leq 1$

With respect to $\lambda$ satisfying the following condition:

$$\left|1 + h_{exp}\Omega(\lambda)\right| \le 1$$

We obtain $|1 + h\Omega(\lambda)|\ 0 \le 1$,
so the computation result is within the stable region. $\cdots$ (40) In other words, stable regions due to h contain stable regions due to $h_{exp}$ and are larger than stable regions due to $h_{exp}$.
Meanwhile, regarding $\lambda$ in case of $\Omega(\lambda) = 0$, we obtain:

$$\left|1 + h_{exp}\Omega(\lambda)\right| = \left|1 + h\Omega(\lambda)\right| = 1 \qquad \cdots \ (4\ 1)$$

And with respect to $\lambda$ of $\Omega(\lambda) = 0$, stable regions due to h and $h_{exp}$ are coincident or same.
Computation accuracy or precision of the Yummy method according to the present embodiment will be explained. The computation accuracy of the state equation (ordinary differential equation) of the Yummy method of the aforementioned expressions (18) and (19) asymptotically approaches N-th order matrix exponential approximation method if value of $h_{exp}$ is close to value of h, but in case where $h_{exp}$ is not close to h, for example, in case of $h = 0.2\ h_{exp}$, the computation accuracy or precision is deteriorated.
For example, two motion equations shown by the expressions (42) and (43) as below are considered:

$$m_1\ddot{x}_1 - k_s(x_2 - x_1) + c\dot{x} + kx_1 = 0 \qquad \cdots \ (4\ 2)$$

$$m_2\ddot{x}_2 + k_s(x_2 - x_1) = 0 \qquad \cdots \ (4\ 3)$$

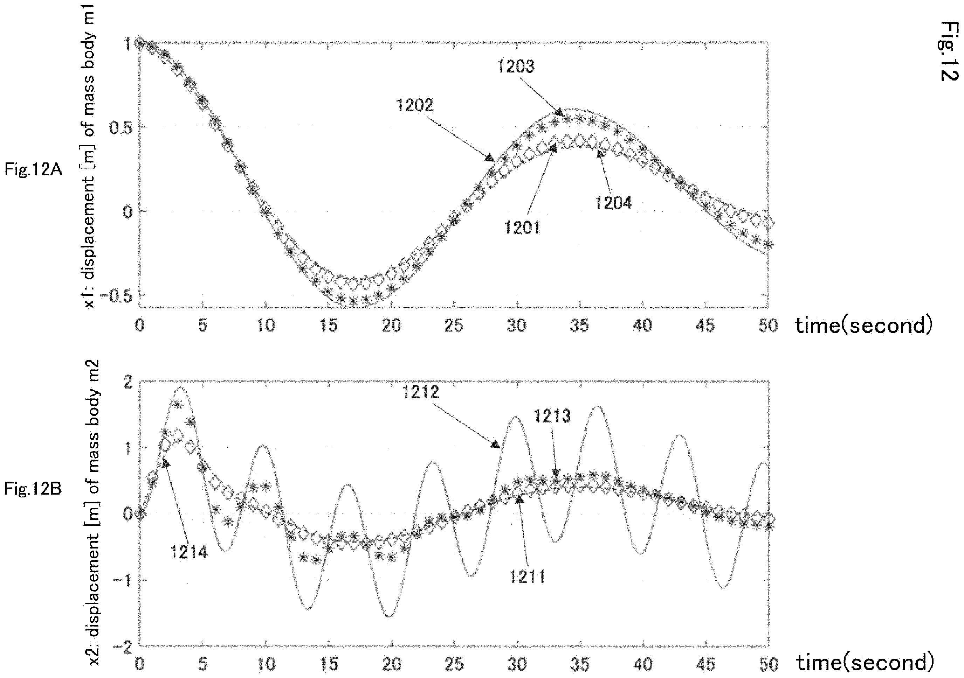

Results of computations of the above motion equations of the above expressions (42) and (43) conducted under the below specifications using the Yummy method, are shown in Fig.12A and Fig. 12B. It is noted that since computation result according to the forward Euler method diverges, the backward Euler method shown by the aforementioned expression (15) is used for the purpose of comparison.

$m_1 = 300 \qquad m_2 = 1$
$ks = 0.9 \qquad k = 10 \qquad c = 10$

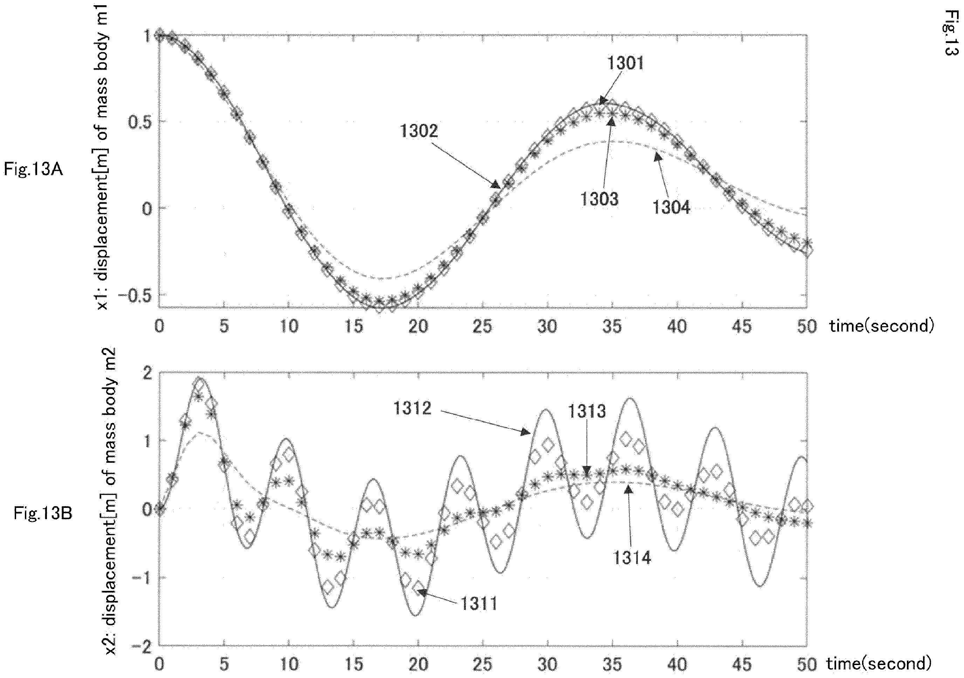

Fig.12A shows results of solutions of the motion equations of the aforementioned expressions (42) and (43), where the abscissa denotes time (second), and the ordinate denotes "$x_1$ : displacement(m) of a mass body $m_1$". "1201" (mark $\diamond$) denotes computation results of the Yummy method ($h_{exp} = 1$, $h = 0.2$) according to the present embodiment. "1202" (solid line) denotes exact solutions. "1203" (mark *) is on the Backward Euler method ($h = 0.2$). "1204"(broken line) is on the Backward Euler method ($h = 1$).
Fig.12B shows results of solutions of the aforementioned motion equations of the expressions (42) and (43), where the abscissa denotes time (second), and the ordinate denotes "$x_2$ : displacement(m) of a mass body $m_2$". "1211" (mark $\diamond$) denotes computation results of the Yummy method ($h_{exp} = 1$, $h = 0.2$) according to the present embodiment. "1212" (solid line) denotes exact solutions. "1213" (mark *) is on the Backward Euler method ($h = 0.2$). "1214"(broken line) is on the Backward Euler method ($h = 1$).
As shown in Fig. 12, in the case of $h_{exp} = 1$ and $h = 0.2$, the computation results obtained by the Backward Euler method ($h = 0.2$) of the expression (15) is closer to the exact solutions.
In order to compensate for deterioration in computation accuracy as above-mentioned, as shown by the examples in Fig. 13, a plurality of $h_{exp}$ are prepared to compute a plurality of Yummy matrices $A_{ymH}$ and $A_{ymL}$ corresponding thereto and memorize all of them, and depending on the values of $h_H$ and $h_L$ measured, one of the plurality of the computation results may be selected.
Fig. 13 shows results of the case where $h_{exp} = 0.25$ was selected at $h = 0.2$. Fig.13A shows results of solutions of the motion equations of the aforementioned expressions (42) and (43), where the abscissa denotes time (second), and the ordinate denotes "$x_1$ : displacement(m) of a mass body $m_1$". "1301" (mark $\diamond$) denotes computation results according to the Yummy method ($h_{exp} = 0.25$, $h = 0.2$) of the present embodiment. "1302"(solid line) denotes exact solutions. "1303"(mark *) is on the Backward Euler method ($h = 0.2$). "1304"(broken line) is on the Backward Euler method ($h = 1$).
Fig.13B shows results of solutions of the motion equations of the aforementioned expressions (42) and (43), where the abscissa denotes time (second), and the ordinate denotes "$x_2$ : displacement(m) of a mass body $m_2$".

"1311"(mark $\diamond$) denotes computation results of the Yummy method ($h_{exp}$ = 0.25, h = 0.2) according to the present embodiment. "1312" (solid line) denotes exact solutions. "1313"(mark *) is on the Backward Euler method (h = 0.2). "1314"(broken line) is on the Backward Euler method (h = 1).

Fig. 13 shows that, if h = $h_{exp}$, the accuracy coincides with the N-th order matrix exponential approximation method, and if N is made large, quite high accuracy can be acquired. It will be seen that even if h ≠ $h_{exp}$, quite high speed computation could be attained with high accuracy, using the Yummy matrices $A_{ymH}$ and $A_{ymL}$ by approximate $h_{exp}$.

<SILS Computing device>

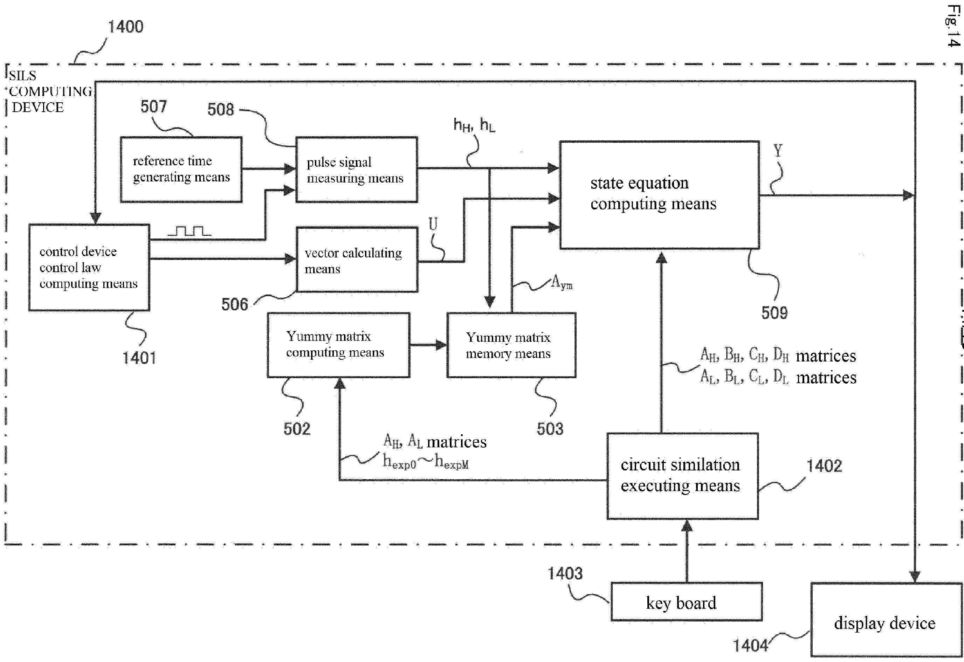

Fig. 14 is a block diagram showing the other embodiment of the computing device. Fig. 14 shows an example in which a computing device 1400 constitutes SILS. Hereinafter, this computing device is called as SILS computing device 1400. In Fig. 14, communication means 501 in Fig. 5 is replaced by a circuit simulation executing means 1402, and the afore mentioned A, B, C and D matrices which are used in the state equation are set. In Fig. 14, block having the same reference number as in Fig.5 has the same function as that in Fig. 5.

The SILS computing device 1400 is provided with a control device control law computing means 1401. In the HILS computing device 500 shown in Fig. 5, the control device is connected to outside of the computing device 500 that functions as HILS, through digital signal input means 504, voltage input means 505 or voltage output means 510. On the contrary, in Fig. 14, the operation of said control device can be simulated by the control device control law computing means 1401 in the SILS computing device 1400.

According to the SILS computing device 1400 shown in Fig. 14, it is possible to verify the operation of the control law of the control device by itself or by the embedded control device control law computing means 1401. Output from the state equation computing means 509 is fed back to the control device control law computing means 1401 and is displayed on the display device 1404 to be visually recognized. Also, input vector U(t) from the control device control law computing means 1401 to the state equation computing means 509 may be made visually confirmed by the display device 1404.

The SILS computing device 1400 is provided with a built-in circuit simulation executing means 1402 and can execute circuit simulation software executed by the host computer 520 shown in Fig. 5. The circuit simulation executing means 1402 derives the state equation from the circuit diagram (refer to Fig.6) inputted through the key board device 1403 operated by user, and generates $A_H$, $B_H$, $C_H$ and $D_H$ matrices and $A_L$, $B_L$, $C_L$ and $D_L$ matrices in the same way as the case of the HILS computing device 500.

The circuit simulation executing means 1402 analyzes the state equation, calculates (M+1) computing steps from $h_{exp0}$ to $h_{expM}$, which are predetermined constants by which computations are made stably, and send them to the Yummy matrix computing means 502. Meanwhile, values of these computing steps are, in order, $h_{expM}$ < ... < $h_{exp1}$ < $h_{exp0}$.

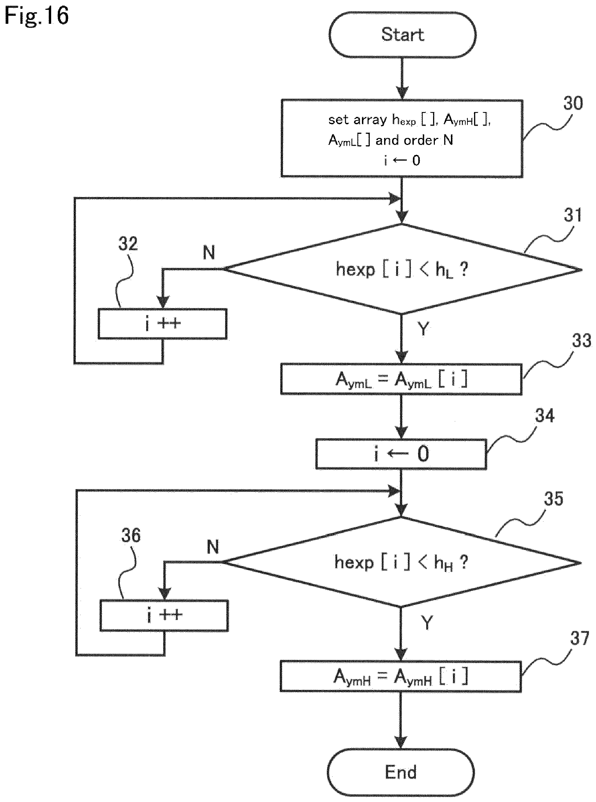

The Yummy matrix computing means 502 computes $A_{ym0H}$ to $A_{ymMH}$ matrices and $A_{ym0L}$ to $A_{ymML}$ matrices, based on respective values of $h_{exp0}$ to $h_{expM}$, and store them in the Yummy matrix memory means 503. The Yummy matrix memory means 503 stores these data in the respective arrays of $h_{exP}[i]$, $A_{ymL}[i]$ and $A_{ymH}[i]$ ($0 \le i \le 3$), in corresponding relationships shown in a table of Fig. 16, and sets order N in the Yummy method for each of the data sets.

If the simulation starts, the Yummy matrix memory means 503 selects $A_{ymH}$ matrix or $A_{ymL}$ matrix, depending on values of computing steps $h_H$ and $h_L$ sent from the pulse signal measuring means 508, and send them to the state equation computing means 509.

Fig. 16 is a flowchart showing an example of Yummy matrix selection processing executed by the Yummy matrix memory means 503.

As illustrated in table shown in Fig.16, the respective data arrays $h_{exp}[i]$, $A_{ymL}[i]$ and $A_{ymH}[i]$ ($0 \le i \le 3$) are set, and orders N in the Yummy method are also set for every respective data sets. Variable "i" of repetition is reset to "0" (step 30 in Fig. 16).

Next, in Fig. 16, while value of variable "i" is being incremented by +1 in step 32, checking operations for values of respective array data $h_{exp}[i]$ are repeated until judgement that value of array data $h_{exp}[i]$ has become less than value of computing step $h_L$ is made in step 31. (Judgement NO in step 31 -> step 32 -> judgement in step 31, is repeated.)

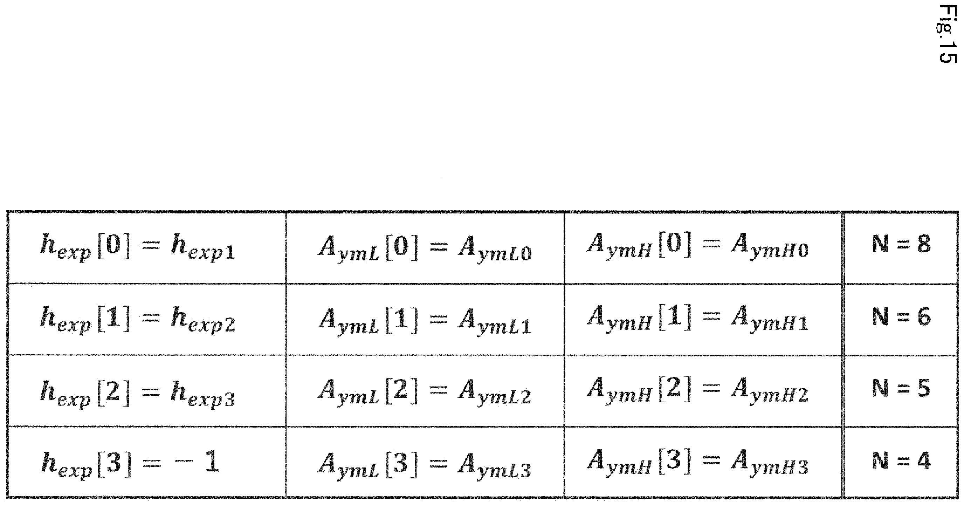

If value of array data $h_{exp}[i]$ has become less than value of computing step $h_L$ and judgement in step 31 becomes YES, value of array data $A_{ymL}[i]$ corresponding to value of variable "i" at that time is set as $A_{ymL}$ matrix (step 33 in Fig.16). Meanwhile, as shown in the table in Fig.15, value of array data $h_{exp}[i]$ is so set to decrease, in accordance with increase of "i", from the maximum value (= $h_{exp}[0]$), and since the last value is "-1", judgement in step 31 becomes always YES at any value of "i".

Next, referring to Fig. 16, after value of the variable "i" in step 34 has been reset to "0", while value of the variable "i" in step 36 is incremented by "+1", checking of values of the respective array data $h_{exp}[i]$ is repeated until judgement that value of array data $h_{exp}[i]$ has been less than value of the computing step $h_H$, is made (Judgement NO in step 31 →step 32 →judgement in step 31, is repeated.)

When value of array data $h_{exP}[i]$ has become less than value of the computing step $h_H$ and judgement in step 35 has become YES, value of the array data $A_{ymH}$ [i] corresponding to value of the variable [i] at that time is set as $A_{ymH}$ matrix (step 37 in Fig.16). At this time also, values of array data $h_{exp}$ [i] are so set to decrease, in accordance with the increase of "i", from the largest value ($h_{exp}$[0]). Since the last value is "-1", judgement in step 37 becomes always YES at any value of "i".

As understood from the table in Fig.15, for example, there are the following relationships:

$$h_{exp\,0} = 1 \qquad h_{exp\,1} = \frac{1}{2} h_{exp\,0} \qquad h_{exp\,2} = \frac{1}{4} h_{exp\,0} \qquad h_{exp\,3} = \frac{1}{8} h_{exp\,0}$$

Accordingly, with respect to order N to be used for computing $A_{ymL}$ and $A_{ymH}$, in view that, if value of $h_{exp}$ to be used becomes small, computation accuracy is improved and computation stable region is enlarged, it is possible to reduce time for computing $A_{ymL}$ and $A_{ymH}$ by reducing value of "N" if value of $h_{exp}$ has become small, as shown in table 15.

As described above, there is the relationship, as below:

$$h_{exp3} < h_{exp2} < h_{exp1} < h_{exp0}.$$

For this, according to control processing of the flow chart shown in Fig. 16, if $h_H$ satisfies, for example, $h_{exp0} \leq h_H < h_{exp1}$, it means that $A_{ymL}$ matrix computed using $h_{exp0}$, is selected. Thus, the state equation computing means 509 shown in Fig. 14 can compute with high accuracy and with high stability using $A_{ymL}$ matrix.

In the SILS computing device 1400 having configuration as shown in Fig. 14, it is not necessary to provide the digital signal input means 504 and the voltage output means 510 as required in the HILS computing device 500 shown in Fig. 5, but it is possible for the control device control law computing means 1401 to execute control law for testing, and execute experiment/verification as to whether the simulated object to be controlled is properly controlled or not.

As described above, the computing device according to the present embodiment can execute the computation for solving stably the Stiff ordinary differential equation, with low computing load and with high accuracy. Thereby, it becomes possible to enlarge the scope of the development of the control device to which the HILS is applied. Further, not only in the SILS, but also in the field of general numerical computation, time for computing can be reduced, and various analyses can be effectively conducted.

The Yummy method explained with respect to the present embodiment, is a remarkable computing algorithm characterized in, while having quite large stably computing region on the complex plane, less computing load that is equivalent to that of the forward Euler method whose computation load is lowest.

Accordingly, the present Yummy method can be applied to a use such as HILS which has a limit in time for computation but manages to solve a stiff equation, and thereby it becomes possible to conduct a simulation of a mechanism or an electronic circuit as illustrated in Fig. 6, which was difficult to simulate conventionally, in other words, it becomes possible to conduct a real time simulation.

In addition, in the fields of SILS other than HILS, for conducting verification of control algorithm of control equipment in a computing machine through no physical signals, and further in the field of general numerical control, the present inventive method can contribute to reducing computing time, enhancing integration between the verification results of the SILS and the HILS, and performing various analyses effectively.

**Explanation of Reference Symbols**

101, 102, 103, 104, 105, 106, 107, 108, 201, 202,203, 901, 902, 903, 904, 1001, 1002, 1101, 1102, 1103 stable region curve

500 HILS computing device

501 communication means

502 Yummy matrix computing means

503 Yummy matrix memory means

504 digital signal input means

505 voltage input means

506 vector calculating means

507 reference time generating means

508 pulse signal measuring means

509 state equation computing means

510 voltage output means

520 host computer

1400 SILS computing device

1402 circuit simulation executing means

1403 key board device

1404 display device

**Claims**

1. A numerical computing device for executing an operation solving a state equation that is an ordinary differential equation which is a mathematical model of an action of an object to be controlled, comprising:

equation setting means for setting a state equation, which, with respect to an ordinary differential equation comprising a term of a state variable vector term indicating a state multiplied by a first coefficient matrix, and a term of an input vector term indicating an input multiplied by a second coefficient matrix, has a form of a difference equation showing a difference relationship between discrete times determined by a predetermined computing step, in said state equation said first coefficient matrix and said second coefficient matrix each being defined to contain a first matrix power series which approximates a matrix exponential function whose index is a constant matrix that is deemed to be constant invariable during a certain time interval and composed of a power terms of a product of predetermined computing step multiplied by said constant matrix and which is in a finite order; advance computing means for separating said computing steps into time invariable computing steps that are invariable with respect to time and time variable computing steps that are variable with respect to time, and at least, in advance of the operation solving said state equation, computing a second matrix power series which is in said finite order and composed of a power term of a product of said time invariable computing step multiplied by said constant matrix, and state equation computing means which, while computing respectively said first coefficient matrix and said second coefficient matrix based on said second matrix power series computed in advance, executes the operation solving said differential equation on the basis of the time variable computing steps sequentially computed.

2. A numerical computing device for an ordinary differential equation according to claim 1, wherein

said first matrix power series is defined as

$$\sum_{k=0}^{N} \frac{1}{k!}(hA)^k \qquad \cdots \quad ( 1 )$$

,

where "A" denotes said constant matrix, "h" denotes said computing step and "N" denotes said finite order; said first coefficient matrix is defined, using said first matrix power series defined as the expression (1), by an operational expression (2) having the following expression:

$$\left( \sum_{k=0}^{N} \frac{1}{k!} (hA)^k \right) \qquad \cdots \quad (2)$$

said second coefficient matrix is defined, using said first matrix power series defined as the equation (1), by an operational expression (3) having the following expression:

$$\left( \sum_{k=0}^{N} \frac{1}{k!} (hA)^k - I \right) A^{-1} B \qquad \cdots \quad (3)$$

where "$A^{-1}$" denotes an inverse matrix of said constant matrix A, "B" denotes a second constant matrix, and "I" denotes an identity matrix;
said equation setting means sets said difference equation that is said state equation, on the basis of an operation of said expression (2) and an operation of said expression (3), as

$$X_{n+1} = \left( \sum_{k=0}^{N} \frac{1}{k!} (hA)^k \right) X_n + \left( \sum_{k=0}^{N} \frac{1}{k!} (hA)^k - I \right) A^{-1} B U_n \qquad \cdots \quad (4)$$

where "n" denotes said discrete time determined by said computing step h, $X_n$ and $X_{n+1}$ denote respectively said state variable vector terms in said discrete times "n" and "n+1", and "Un" denotes said input vector term in said discrete time "n";
said advance computing means separates said computing steps "h" into time invariable computing steps $h_{exp}$ that are invariable in time and time variable computing steps h that are variable in time, and computes in advance said second matrix power series as

$$A_{ym} = \left( I + \frac{1}{2} h_{exp} A + \frac{1}{3!} (h_{exp} A)^2 + \cdots + \frac{1}{N!} (h_{exp} A)^{N-1} \right) = I + \sum_{k=2}^{N} \frac{1}{k!} (h_{exp} A)^{k-1}$$

$$\cdots \quad (5)$$

; and further, computes in advance respectively a first constant coefficient matrix ($A_{ym}A$) and a second constant coefficient matrix ($A_{ym}B$) based on said expression (5); and
said state equation computing means executes said solving operation for the difference equation corresponding to the expression (4) having a form shown by the following expression (6):

$$X_{n+1} = X_n + h \left( (A_{ym}A) X_n + (A_{ym}B) u_n \right) \qquad \cdots \quad (6)$$

on the basis of the first constant coefficient matrix ($A_{ym}A$), the second constant coefficient matrix ($A_{ym}B$) and said time variable computing steps "h" sequentially computed.

3. A numerical computing device of an ordinary differential equation according to claim 1 or 2, further comprising:

   memory means for memorizing said second matrix power series computed in advance, wherein
   said state equation computing means executes the solving operation for said difference equation, using said second matrix power series memorized in said memory means.

4. A numerical computing device for an ordinary differential equation according to any one of claims 1 to 3, wherein

   said time invariable computing step is so set that a product of the eigen value of said state equation multiplied by said time invariable computing step is present within a stable region in which the computing result of said state equation is stable; and

in the case where, in computing said time variable computing step, value of the computed time variable computing step becomes larger than value of said time invariable computing step, the value of said time variable computing step is computed as the value of said time invariable computing step.

5. A numerical computing device for an ordinary differential equation according to any one of claims 1 to 4, said numerical computing device being a device for, in development of a control device, simulating an object to be controlled by said control device, said numerical computing device further comprising:

output variable calculating means calculating an output variable vector $Y_n$ by an operation shown by the following equation (7):

$$Y_n = CX_n + Du_n \qquad \cdot \cdot \cdot \ (7)$$

where $X_n$ denotes said state variable vector term in discrete time n, $U_n$ denotes said input vector term in said discrete time n, and C and D denote predetermined constant matrices, and

calculating said expression (7) at time intervals of said time invariable computing step, in providing physical signal corresponding to said output variable vector Yn to said object to be controlled.

6. A numerical computing device of an ordinary differential equation according to any one of claims 1 to 5, said computing device being a device for, in development of a control device, simulating an object to be controlled by said control device, said numerical computing device further comprising:
pulse signal measuring means that calculates said time variable computing steps by positive numbers in accordance with signals obtained from said control device.

7. A numerical computing device for an ordinary differential equation according to any one of claims 1 to 6, wherein

said advance computing means sets a plurality of said time invariable computing steps, and computes respectively, in advance of the solving operation of said state equation, a plurality of said second matrix power series for said respective plurality of the time invariable computing steps, and

said state equation computing means selects one of said plurality of the second matrix power series computed in advance by said advance computing means and uses the selected one for the solving operation for said difference equation.

8. A numerical computing device for an ordinary differential equation according to claim 7, wherein
said advance computing means, when computing, in advance of the solving operation for said state equation, respectively a plurality of said second matrix power series for said respective plurality of the time invariable computing steps, executes computation at the orders respectively corresponding to said set plurality of the time invariable computing steps.

9. A method for executing an operation solving a state equation that is an ordinary differential equation in a computing machine, the ordinary differential equation modeling mathematically an action of an object to be controlled, said method comprising steps of:

step for setting a state equation, which, with respect to an ordinary differential equation comprising a term of a state variable vector term indicating a state multiplied by a first coefficient matrix and a term of an input vector term indicating an input multiplied by a second coefficient matrix, has a form of a difference equation showing a difference relationship between discrete times determined by a predetermined computing step, in said state equation said first coefficient matrix and said second coefficient matrix each being defined to contain a first matrix power series which approximates a matrix exponential function whose index is a constant matrix that is deemed to be constant invariable during a certain time interval and composed of a power term of a product of a predetermined computing step multiplied by said constant matrix and which is in a finite order;

step for separating said computing steps into time invariable computing steps invariable in time and time variable computing steps variable in time, and computing, at least, in advance of the operation solving said state equation, a second matrix power series which is composed of a power term of a product of said time invariable computing steps multiplied by said constant matrix and is in said finite order; and

step for executing the solving operation for said difference equation on the basis of the sequentially computed time variable computing steps, while computing respectively said first coefficient matrix and said second coefficient matrix based on said second matrix power series computed in advance.

**10.** A memory storing a program for executing an operation solving a state equation that is an ordinary differential equation in a computing device, the ordinary differential equation modeling mathematically an action of an object to be controlled, the program being for executing the processing steps of:

processing step for setting a state equation which, with respect to an ordinary differential equation comprising a term of a state variable vector term indicating a state multiplied by a first coefficient matrix and a term of an input vector term indicating an input multiplied by a second coefficient matrix, has a form of a difference equation showing a difference relationship between discrete times determined by a predetermined computing step, in said state equation said first coefficient matrix and said second coefficient matrix each being defined to contain a first matrix power series which approximates a matrix exponential function whose index is a constant matrix that is deemed to be constant invariable during a certain time interval and composed of a power term of a product of a predetermined computing step multiplied by said constant matrix and which is in a finite order;
processing step for separating said computing steps into time invariable computing steps invariable in time and time variable computing steps variable in time, and computing, at least, in advance of the solving operation for said state equation, a second matrix power series which is in said finite order and composed of a power term of a product of said time invariable computing step multiplied by said constant matrix; and
processing step for executing the solving operation for said difference equation on the basis of the sequentially computed time variable computing steps, while computing respectively said first coefficient matrix and said second coefficient matrix based on said second matrix power series computed in advance.

Fig.1

Fig.2

EP 4 325 381 A1

Fig. 3

Computation by
Hi-Level Equation

Computation by
Lo-Level Equation

Fig. 4

$$X_{tmp} = X_3 + h_f A_H X_3$$

$$X_4 = X_{tmp} + (h - h_f)A_L X_{tmp}$$

Computation by Hi-Level Equation

Compuration by Lo-Level Equation

EP 4 325 381 A1

Fig. 5

HILS COMPUTING DEVICE 500, 508

- voltage output means 510
- state equation computing means 509
- timing pulse
- Y
- communication means 501 — $A_H$, $B_H$, $C_H$, $D_H$ matrices; $A_L$, $B_L$, $C_L$, $D_L$ matrices
- host computer 520 — A, B, C, D
- $A_{vm}$ matrix
- Yummy matrix memory means 503
- Yummy matrix computing means 502 — $A_H$, $A_L$ matrices, $h_{exp}$
- $A_H$, $A_L$ matrices, $h_{exp}$
- $h_H$, $h_L$
- U
- pulse signal measuring means 508
- vector calculating means 506
- reference time generating means 507
- $h_{exp}$
- pulse
- digital signal input means 504
- voltage input means 505

Fig. 6

EP 4 325 381 A1

## Fig. 7

Start

01 — Count ← 0

02 — Has clock signal changed?  N / Y

03 — Count ++

04 — old_pulse == 0 ?  Y / N

05 — pulse == 1 ?  Y / N

06 — pulse == 0 ?  Y / N

07 — $h_L \leftarrow count$  $h_H \leftarrow h_{exp} - count$

08 — $h_L \leftarrow h_{exp}$  $h_H \leftarrow 0$

09 — $h_L \leftarrow h_{exp} - count$  $h_H \leftarrow count$

10 — $h_L \leftarrow h_{exp}$  $h_H \leftarrow 0$

11 — $hexp \leqq Count$ ?  N / Y

12 — generate timing pulse

13 — old_pulse ← pulse

Fig.8

```
              ┌──────────┐
              │  Start   │
              └────┬─────┘
                   │
                   ▼
        ┌─────────────────────┐
        │    X ← X₀           │ ～ 20
        │  old_pulse ← 0      │
        └──────────┬──────────┘
                   │
  ┌────────────────┤
  │                ▼
  │         ◇ Timing pulse? ◇ ～ 21
  │       N ◇                ◇
  │   └─────◇                ◇
  │                │ Y
  │                ▼
  │     Y ◇                ◇ N
  │   ┌───◇ old_pulse == 0 ?◇───┐ ～ 22
  │   │   ◇                ◇    │
  │   ▼                        ▼
  │ ┌──────────────┐      ┌──────────────┐
  │ │ Y ← B_L X+D_L U│ 23 │ Y ← B_H X+D_H U│ 24
  │ └──────┬───────┘      └──────┬───────┘
  │        └──────────┬──────────┘
  │                   ▼
  │         Y ◇              ◇ N
  │     ┌─────◇ pulse == 0 ? ◇─────┐ 25
  │  26 │     ◇              ◇     │ 27
  │     ▼                          ▼
  │ ┌──────────────────┐  ┌──────────────────┐
  │ │ X_tmp ← ...      │  │ X_tmp ← ...      │
  │ └────────┬─────────┘  └────────┬─────────┘
  │          └──────────┬──────────┘
  │                     ▼
  │           ┌──────────────────┐
  │           │ old_pulse ← pulse│ 28
  │           └────────┬─────────┘
  └────────────────────┘
```

$X \leftarrow X_0$
$old\_pulse \leftarrow 0$  — 20

Timing pulse? — 21

old_pulse == 0 ? — 22

$Y \leftarrow B_L X + D_L U$ — 23

$Y \leftarrow B_H X + D_H U$ — 24

pulse == 0 ? — 25

$X_{tmp} \leftarrow X + h_H A_{ymH}(A_H X + B_H U)$
$X \leftarrow X_{tmp} + h_L A_{ymL}(A_L X_{tmp} + B_H U)$ — 26

$X_{tmp} \leftarrow X_n + h_L((A_{ymL} A_L) X + (A_{ymL} B_L) U)$
$X \leftarrow X_{tmp} + h_H((A_{ymH} A_H) X_{tmp} + (A_{ymH} B_H) U)$ — 27

$old\_pulse \leftarrow pulse$ — 28

Fig.9

Fig.10

Fig.11

Fig.12

Fig.12A

Fig.12B

Fig.13

Fig.13A

Fig.13B

Fig.14

Fig.15

EP 4 325 381 A1

| | | | |
|---|---|---|---|
| $h_{exp}[0] = h_{exp1}$ | $A_{ymL}[0] = A_{ymL0}$ | $A_{ymH}[0] = A_{ymH0}$ | N = 8 |
| $h_{exp}[1] = h_{exp2}$ | $A_{ymL}[1] = A_{ymL1}$ | $A_{ymH}[1] = A_{ymH1}$ | N = 6 |
| $h_{exp}[2] = h_{exp3}$ | $A_{ymL}[2] = A_{ymL2}$ | $A_{ymH}[2] = A_{ymH2}$ | N = 5 |
| $h_{exp}[3] = -1$ | $A_{ymL}[3] = A_{ymL3}$ | $A_{ymH}[3] = A_{ymH3}$ | N = 4 |

Fig.16

```
                          ┌──────────────┐
                          │    Start     │
                          └──────┬───────┘
                                 │
                                 ▼
                    ┌─────────────────────────┐
                    │ set array hexp [ ], AymH[ ],│  30
                    │  AymL[ ] and order N        │
                    │         i ← 0               │
                    └─────────────────────────┘
                                 │
            ┌────────────────────┤
            │                    ▼
            │                 ◇ hexp [ i ] < hL ?  ◇   31
   32       │         N ◁─────◇                   ◇
     ┌──────┴──────┐         ◇                    ◇
     │    i ++      │                 │ Y
     └─────────────┘                  ▼
                            ┌─────────────────────┐
                            │  AymL = AymL [ i ]   │  33
                            └─────────────────────┘
                                     │
                                     ▼
                            ┌─────────────────────┐
                            │       i ← 0          │  34
                            └─────────────────────┘
            ┌────────────────────┤
            │                    ▼
            │                 ◇ hexp [ i ] < hH ?  ◇   35
   36       │         N ◁─────◇                   ◇
     ┌──────┴──────┐         ◇                    ◇
     │    i ++      │                 │ Y
     └─────────────┘                  ▼
                            ┌─────────────────────┐
                            │  AymH = AymH [ i ]   │  37
                            └─────────────────────┘
                                     │
                                     ▼
                            ┌──────────────┐
                            │     End      │
                            └──────────────┘
```

**INTERNATIONAL SEARCH REPORT**

| International application No. |
| --- |
| **PCT/JP2022/014497** |

**A. CLASSIFICATION OF SUBJECT MATTER**

*G06F 17/13*(2006.01)i
FI: G06F17/13

According to International Patent Classification (IPC) or to both national classification and IPC

**B. FIELDS SEARCHED**

Minimum documentation searched (classification system followed by classification symbols)

G06F17/13

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-199635 A (RICOH CO LTD) 23 October 2014 (2014-10-23)<br>entire text, all drawings | 1-10 |
| A | US 2004/0020356 A1 (OJANEN, Harri) 05 February 2004 (2004-02-05)<br>entire text, all drawings | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2022** | **26 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/014497**

| Patent document cited in search report | | | Publication date (day/month/year) | Patent family member(s) | | Publication date (day/month/year) |
|---|---|---|---|---|---|---|
| JP | 2014-199635 | A | 23 October 2014 | (Family: none) | | |
| US | 2004/0020356 | A1 | 05 February 2004 | WO 2002/033495 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5692739 B

- JP 2005025651 A

**Non-patent literature cited in the description**

- **KIDOKORO HITOSHI ; NAKAHARA MASATOSHI.** High Speed Computation Technique based on Explicit Method Realizing Real Time Simulation of DC/DC Convertor. *IEICE Transactions on Communications,* June 2014, vol. J97-B (6

- **KIDOKORO HITOSHI ; NAKAHARA MASATOSHI.** Real Time Simulation of Switching Convertor using FPGA. *IEICE Transactions on Communications*